# EUROPEAN PATENT APPLICATION

(11) **EP 4 691 739 A1**
(43) Date of publication of application: **11.02.2026**
(21) Application number: 23945725.2
(22) Date of filing: 20.12.2023
(51) Int. Cl.: B29C 64/393, B29C 64/35, B29C 64/20, B33Y 50/00, B33Y 40/00, B33Y 30/00

(54) **3D PRINTING SYSTEM AND METHOD**

(30) Priority: 14.07.2023 CN 202310871958; 14.07.2023 CN 202310871921
(71) Applicant: Guangzhou Heygears IMC. Inc, Guangzhou, Guangdong 510663 (CN)
(72) Inventor: GAO, Weijing, Guangzhou, Guangdong 510663 (CN); LIANG, Yuhao, Guangzhou, Guangdong 510663 (CN); DENG, Lingfeng, Guangzhou, Guangdong 510663 (CN); WAN, Xin, Guangzhou, Guangdong 510663 (CN)
(74) Representative: Herzog IP Patentanwalts GmbH
(86) International application number: PCT/CN2023/140405
(87) International publication number: WO 2025/015847

(57) **Abstract**

The present invention discloses a 3D printing system and method. The system includes a 3D printer, a controller, and a gas separation apparatus. The controller connects with the 3D printer, and is configured to control the 3D printer to perform 3D printing. The controller also connects with the gas separation apparatus, and is configured to generate a control instruction according to a preset control policy and send same to the gas separation apparatus. The gas separation apparatus is configured to, based on the received control instruction, separate a target gas from air received from the outside of the gas separation apparatus, so as to transport same to the 3D printer. According to the present invention, the technical problem that there is no stable gas supply apparatus suitable for 3D printing in the related art is solved.

## Description

### Technical Field

The present invention relates to the field of gas preparation, and specifically to a 3D printing system and method.

### Background

During light-curing 3D printing of a Digital Light Processing (DLP) technology, there is adhesion between cured resin and a material tray, and an adhesive force needs to be overcome when the cured resin is peeled from the material tray. If the adhesive force is larger, the printing efficiency of 3D printing is lower. In order to reduce the adhesive force, an oxygen-enriched region needs to be formed between the resin and the material tray.

However, a low temperature distillation method, a membrane separation method, and a pressure swing adsorption method in the related art has the disadvantages of being large in production quantity, large in investment, high in energy consumption, complex in operation, high in requirement for cleanliness of input air, strict in requirement for degree of purification, unstable in gas supply, etc. when preparing an oxygen-enriched gas.

Therefore, in the related art, there is a technical problem that there is no stable gas supply apparatus suitable for 3D printing in the related art.

In view of the above problem, no effective solution has been proposed yet.

### Summary

Embodiments of the present invention provide a 3D printing system and method, so as to at least solve the technical problem that there is no stable gas supply apparatus suitable for 3D printing in the related art.

An aspect of the embodiments of the present invention provides a 3D printing system, including a 3D printer, a controller, and a gas separation apparatus. The controller communicates with the 3D printer, and is configured to control the 3D printer to perform 3D printing. The controller also communicates with the gas separation apparatus, and is configured to generate a control instruction according to a preset control policy and send same to the gas separation apparatus. The gas separation apparatus is configured to, based on the received control instruction, separate air received from outside of the gas separation apparatus to obtain a first target gas, so as to transport same to the 3D printer.

Optionally, the control policy is configured to: in response to a start operation triggered by a user or timed start operation, generate and send a first control instruction to the gas separation apparatus, where the first control instruction includes starting an operation of transportation of the first target gas; and in response to a closing operation triggered by the user or timed closing operation, generate and send a second control instruction to the gas separation apparatus, where the second control instruction includes stopping an operation of the transportation of the first target gas.

Optionally, the control policy is configured to: generate and send a first control instruction to the gas separation apparatus when detecting that the 3D printer being an operation state, where the first control instruction includes starting an operation of transportation of the first target gas; and generate and send a second control instruction to the gas separation apparatus when detecting that the 3D printer being not in the operation state, where the second control instruction includes stopping an operation of the transportation of the first target gas.

Optionally, the control policy is configured to: determine that the 3D printer is in the operation state when detecting one or more of: the 3D printer is powered on, a light source of the 3D printer starts to transmit light, a forming platform of the 3D printer moves for a nth time, a printing task start instruction is received, and a printing material of the 3D printer reaches a preset position; and determine that the 3D printer is not in the operation state when detecting one or more of: the 3D printer is powered off, the light source of the 3D printer stops to transmit light, the forming platform of the 3D printer moves for an mth time, a printing task stop instruction is received, or the printing material of the 3D printer is lower than the preset position, where m and n are integers, and m is greater than n.

Optionally, the control policy is configured to: generate and send a third control instruction when detecting one or more of: a release film of the 3D printer is higher than a preset calibration position, an air pressure of the first target gas in the 3D printer is higher than a preset air pressure range, airflow of the first target gas in the 3D printer is higher than a preset range, a concentration of the first target gas in the 3D printer is higher than a preset concentration range, or a lower surface bearing force of the release film of the 3D printer is greater than an upper surface bearing force, where the third control instruction includes controlling to reduce a gas transported by the gas separation apparatus; and generate and send a fourth control instruction when detecting one or more of: the release film of the 3D printer is lower than the preset calibration position, the air pressure of the first target gas in the 3D printer is lower than the preset air pressure range, the airflow of the first target gas in the 3D printer is lower than the preset range, the concentration of the first target gas in the 3D printer is lower than the preset concentration range, or the upper surface bearing force of the release film of the 3D printer is less than the lower surface bearing force, where the fourth control instruction includes controlling to increase the gas transported by the gas separation apparatus.

Optionally, the gas separation apparatus is disposed in the 3D printer or is disposed separately and independently from the 3D printer.

Optionally, the gas separation apparatus includes an air receiving apparatus, a gas separation module, and a first target gas output module. The air receiving apparatus is configured to receive and respond to the control instruction from the controller. The air receiving apparatus starts receiving air from the outside of the gas separation apparatus when receiving the first control instruction, and the air receiving apparatus stops receiving the air from the outside of the gas separation apparatus when receiving the second control instruction. The gas separation module is configured to separate the air to obtain the first target gas and transport same to the first target gas output module. The first target gas output module is configured to output the first target gas to the 3D printer when receiving the first target gas.

Optionally, a pressure difference unit is disposed on the first target gas output module; and the pressure difference unit is configured to detect an air pressure of the first target gas and send same to the controller.

Optionally, a gas concentration sensor is disposed on the first target gas output module; and the gas concentration sensor is configured to detect a concentration of the first target gas and send same to the controller.

Optionally, the 3D printer includes a material tray, and a release film and an inflation cavity, which are disposed at a bottom of the material tray; the release film is disposed above the inflation cavity; the inflation cavity is configured to accommodate the first target gas; a position sensor is disposed on the material tray; and the position sensor is configured to detect position data of the release film and send same to the controller.

Optionally, the gas separation apparatus includes one or more of a nitrogen adsorption module or a nitrogen separation module.

Optionally, the first target gas includes an oxygen-enriched gas, and the gas separation module includes the nitrogen adsorption module. The nitrogen adsorption module connects with the first target gas output module, and the nitrogen adsorption module is configured to transport residual gases after nitrogen adsorption to the first target gas output module.

Optionally, the nitrogen adsorption module is provided with an oxygen-enriched gas discharge port; and the nitrogen adsorption module is configured to discharge the residual gases after nitrogen adsorption via the oxygen-enriched gas discharge port, then release high-pressure adsorbed nitrogen, and perform next nitrogen adsorption after mixing gas after releasing with air received the outside of the gas separation apparatus.

Optionally, the nitrogen adsorption module includes a separation valve and a molecular sieve tower. **The** separation valve is configured to control a gas circulation route in the nitrogen adsorption module. **The** separation valve is provided with a gas inlet configured to receive the air, an air vent configured to allow the air to flow to the molecular sieve tower, and an exhaust port configured to exhaust residual gas. **The** molecular sieve tower is configured to perform high-pressure adsorption on the nitrogen in the air, so as to obtain the residual gases after high-pressure adsorption, and release high-pressure adsorbed nitrogen.

Optionally, the gas separation apparatus further includes a flow-limiting ring; and the flow-limiting ring is configured to limit a flow rate of the first target gas when the first target gas is discharged from the oxygen-enriched gas discharge port.

Optionally, at least two molecular sieve towers are disposed, and the air vent of the separation valve is configured to be switched between the at least two molecular sieve towers.

Optionally, the molecular sieve towers include a first molecular sieve tower and a second molecular sieve tower; the air vent of the separation valve includes a first air vent and a second air vent; and the first air vent connects with the first molecular sieve tower, and the second air vent connects with the second molecular sieve tower.

Optionally, in a first state, the separation valve controls the gas inlet to connect with the first air vent, and the second air vent to connect with the exhaust port; in a second state, the separation valve controls the gas inlet to connect with the second air vent, and the first air vent to connect with the exhaust port; and the separation valve is cyclically switched between the first state and the second state according to a predetermined cycle.

Optionally, when the first molecular sieve tower performs high-pressure adsorption on the nitrogen in the air, and the second molecular sieve tower performs pressure equalizing on the first molecular sieve tower, causing the first molecular sieve tower to reduce a pressure to release the high-pressure adsorbed nitrogen; and when the second molecular sieve tower performs high-pressure adsorption on the nitrogen in the air, and the first molecular sieve tower performs pressure equalizing on the second molecular sieve tower, causing the second molecular sieve tower to reduce a pressure to release the high-pressure adsorbed nitrogen.

Optionally, the gas separation apparatus further includes an adjustment assembly; and the adjustment assembly is configured to limit a flow rate and/or direction of the first target gas when the first target gas is transported to the first target gas output module.

Optionally, the adjustment assembly includes one or more of a flow-limiting ring, a speed control valve, a pressure regulating valve, a one-way valve, or a flow-limiting valve.

Optionally, a speed control valve and/or a one-way valve are/is disposed in the air receiving apparatus.

Optionally, the gas separation apparatus further includes a filter, an oil-free air compressor, and a cooling unit. The filter is configured to filter dust and water vapor in the air, so as to obtain filtered air. The air compressor is configured to increase a gas pressure of the filtered air, and accelerate a gas flow rate of the filtered air, so as to obtain compressed air. The cooling unit is configured to cool the compressed air to obtain processed air.

Optionally, the system further includes a residual gas return channel and a low-oxygen gas output apparatus. The gas separation apparatus is further configured to separate the external air and/or oxygen in a second target gas returned in the residual gas return channel, so as to obtain a third target gas. The residual gas return channel is configured to return the second target gas to the air receiving apparatus. The low-oxygen gas output apparatus is configured to output the third target gas when receiving the third target gas.

Optionally, the gas separation apparatus is provided with a first gas outlet and a second gas outlet; and the second target gas is discharged via the first gas outlet, and flows to the air pre-processing apparatus through the residual gas return channel.

Optionally, the first target gas output module is configured to receive and output the first target gas that is separated by the gas separation apparatus and discharged from the second gas outlet.

Optionally, a speed control valve configured to open an oxygen-enriched gas output channel is disposed on the first target gas output module.

Optionally, an oxygen concentration sensor is disposed on the first target gas output module; and the oxygen concentration sensor is configured to detect an oxygen concentration of the received first target gas.

Optionally, a one-way valve configured to control an air flow direction is disposed on the first target gas output module.

Optionally, the pressure difference unit is further configured to control an opening degree of a speed control valve of the first target gas output module based on the air pressure of the first target gas.

Optionally, the gas separation apparatus is configured to perform high-pressure adsorption on nitrogen in the air received in the air receiving apparatus, and discharge the remaining first target gas after high-pressure adsorption from the second gas outlet; and release the high-pressure adsorbed nitrogen after discharging the first target gas, so as to obtain the second target gas such that the second target gas returns to the gas separation apparatus through the residual gas return channel for cyclic processing.

Optionally, a speed control valve configured to open a low-oxygen gas output channel is disposed on the low-oxygen gas output apparatus.

Optionally, an oxygen concentration sensor is disposed on the low-oxygen gas output apparatus; and the oxygen concentration sensor is configured to detect an oxygen concentration of the received third target gas.

Optionally, a one-way valve configured to control an air flow direction is disposed on the low-oxygen gas output apparatus.

Optionally, a speed control valve configured to regulate an air inflow rate and/or a one-way valve configured to control an air flow direction are disposed on the air receiving apparatus.

Optionally, the residual gas return channel is provided with a switch valve; and the switch valve is configured to open the residual gas return channel.

Another aspect of the embodiments of the present invention further provides a 3D printing method, which is executed by a controller and includes: a control instruction is generated according to a preset control policy, and same is sent to a gas separation apparatus such that the gas separation apparatus, based on the received control instruction, separates a first target gas from air received from the outside of the gas separation apparatus, so as to transport same to a 3D printer.

Optionally, the gas separation apparatus, based on the received control instruction, separating the first target gas from the air received from the outside of the gas separation apparatus, so as to transport same to the 3D printer includes: the external air is received by using an air receiving apparatus, and the received air is conducted into an air pre-processing apparatus; the air pre-processing apparatus is used to process the air received by the air receiving apparatus, so as to obtain processed air, and the processed air is conducted into the gas separation apparatus; and the gas separation apparatus is used to perform high-pressure adsorption on nitrogen in the processed air, and partial first target gas remained after high-pressure adsorption is discharged from a second gas outlet, so as to transport same to the 3D printer.

Optionally, when the second gas outlet of the gas separation apparatus connects with a first target gas output module, and a speed control valve is disposed on the first target gas output module, the method further includes: the speed control valve on the first target gas output module is opened to output the first target gas when an oxygen concentration sensor on the first target gas output module detects that a current oxygen concentration reaches a target oxygen concentration.

Optionally, the method further includes: a speed control valve on the air receiving apparatus and an opening degree of the speed control valve on the first target gas output module are adjusted according to the current oxygen concentration detected by the oxygen concentration sensor on the first target gas output module and the target oxygen concentration.

Optionally, when a pressure difference unit is disposed on the first target gas output module, the method further includes: an air pressure of the first target gas is detected based on the pressure difference unit, and the pressure difference unit is used to control the speed control valve on the first target gas output module and an opening degree of the speed control valve on the air receiving apparatus based on the air pressure of the first target gas.

Optionally, the first target gas is configured to supply oxygen to a printing process for 3D printing.

Optionally, the method further includes: high-pressure adsorbed nitrogen is released after discharging the partial first target gas, so as to obtain a second target gas; the second target gas is returned to the air pre-processing apparatus by using a residual gas return channel, and cyclic processing is performed in combination with the air received by the air receiving apparatus; an oxygen concentration in the second target gas after cyclic processing is detected by using an oxygen concentration sensor on a low-oxygen gas output apparatus of the residual gas return channel; and a third target gas is obtained when the oxygen concentration sensor detects that a current oxygen concentration reaches a target oxygen concentration, and a speed control valve on the low-oxygen gas output apparatus is opened to output the third target gas.

Optionally, the method further includes: a speed control valve on the air receiving apparatus and an opening degree of the speed control valve on the low-oxygen gas output apparatus are adjusted according to the current oxygen concentration detected by the oxygen concentration sensor on the low-oxygen gas output apparatus and the target oxygen concentration.

Optionally, the method further includes: when the second gas outlet of the gas separation apparatus connects with a first target gas output module and a speed control valve is disposed on the first target gas output module, an opening degree of the speed control valve on the first target gas output module is adjusted according to the current concentration detected by the oxygen concentration sensor on the low-oxygen gas output apparatus and the target oxygen concentration.

Optionally, the third target gas is applied to post-processing of 3D printing as a curing protection gas.

Another aspect of the present invention provides a gas supply assembly, including an air receiving apparatus, a gas separation apparatus, a residual gas return channel, and a low-oxygen gas output apparatus. **The** air receiving apparatus is configured to receive external air. **The** gas separation apparatus is configured to separate the external air and/or oxygen in a second target gas returned in the residual gas return channel, so as to obtain a third target gas. **The** residual gas return channel is configured to return the second target gas to the air receiving apparatus. **The** low-oxygen gas output apparatus is configured to output the third target gas when receiving the third target gas.

Optionally, the gas supply assembly further includes an air pre-processing apparatus. A gas outlet of the air receiving apparatus connects with a gas inlet of the air pre-processing apparatus, and a gas outlet of the air pre-processing apparatus connects with a gas inlet of the gas separation apparatus.

Optionally, the air pre-processing apparatus includes a filter, an air compressor, and a cooling unit. **The** filter is configured to filter dust and water vapor in the air received by the air receiving apparatus, so as to obtain filtered air. The air compressor is configured to increase a gas pressure of the filtered air, and accelerate a gas flow rate of the filtered air, so as to obtain compressed air. The cooling unit is configured to cool the compressed air to obtain processed air.

Optionally, the gas separation apparatus is provided with a first gas outlet and a second gas outlet; and the second target gas is discharged via the first gas outlet, and flows to the air pre-processing apparatus through the residual gas return channel.

Optionally, the gas supply assembly further includes a first target gas output module, which is configured to receive and output a first target gas that is separated by the gas separation apparatus and discharged from the second gas outlet.

Optionally, a speed control valve configured to open an oxygen-enriched gas output channel is disposed on the first target gas output module.

Optionally, an oxygen concentration sensor is disposed on the first target gas output module; and the oxygen concentration sensor is configured to detect an oxygen concentration of the received first target gas.

Optionally, a one-way valve configured to control an air flow direction is disposed on the first target gas output module.

Optionally, a pressure difference unit is disposed on the first target gas output module; and the pressure difference unit is configured to detect an air pressure of the first target gas, and control an opening degree of a speed control valve of the first target gas output module based on the air pressure of the first target gas.

Optionally, the gas separation apparatus is configured to perform high-pressure adsorption on nitrogen in the air received in the air receiving apparatus, and discharge the remaining first target gas after high-pressure adsorption from the second gas outlet; and release the high-pressure adsorbed nitrogen after discharging the first target gas, so as to obtain the second target gas such that the second target gas returns to the gas separation apparatus through the residual gas return channel for cyclic processing.

Optionally, the gas separation apparatus includes a separation valve, a molecular sieve tower, and a flow-limiting ring. The separation valve is configured to control a gas circulation route in the gas separation apparatus. The separation valve is provided with a gas inlet configured to receive the processed air, an air vent configured to allow the processed air to flow the molecular sieve tower, and an exhaust port configured to exhaust residual gas. The molecular sieve tower is configured to perform high-pressure adsorption on nitrogen in the processed air, and release the high-pressure adsorbed nitrogen after discharging the remaining first target gas after high-pressure adsorption from the second gas outlet, so as to obtain the second target gas. The flow-limiting ring is configured to limit a flow rate of the first target gas when the first target gas is discharged from the second gas outlet.

Optionally, when the molecular sieve towers include a first molecular sieve tower and a second molecular sieve tower, and the air vent of the separation valve includes a first air vent and a second air vent, the first air vent connects with the first molecular sieve tower, and the second air vent connects with the second molecular sieve tower.

Optionally, in a first state, the separation valve controls the gas inlet to connect with the first air vent, and the second air vent to connect with the exhaust port; in a second state, the separation valve controls the gas inlet to connect with the second air vent, and the first air vent to connect with the exhaust port; and the separation valve is cyclically switched between the first state and the second state according to a predetermined cycle.

Optionally, the first molecular sieve tower connects with the second molecular sieve tower through the flow-limiting ring.

Optionally, when the first molecular sieve tower performs high-pressure adsorption on the nitrogen in the processed air, and the second molecular sieve tower performs pressure equalizing on the first molecular sieve tower, causing the first molecular sieve tower to reduce a pressure to release the high-pressure adsorbed nitrogen; and when the second molecular sieve tower performs high-pressure adsorption on the nitrogen in the processed air, and the first molecular sieve tower performs pressure equalizing on the second molecular sieve tower, causing the second molecular sieve tower to reduce a pressure to release the high-pressure adsorbed nitrogen.

Optionally, a speed control valve configured to open a low-oxygen gas output channel is disposed on the low-oxygen gas output apparatus.

Optionally, an oxygen concentration sensor is disposed on the low-oxygen gas output apparatus; and the oxygen concentration sensor is configured to detect an oxygen concentration of the received third target gas.

Optionally, a one-way valve configured to control an air flow direction is disposed on the low-oxygen gas output apparatus.

Optionally, a speed control valve configured to regulate an air inflow rate and/or a one-way valve configured to control an air flow direction are disposed on the air receiving apparatus.

Optionally, the residual gas return channel is provided with a switch valve; and the switch valve is configured to open the residual gas return channel.

Another aspect of the present invention provides a method for preparing a gas. **The** method includes: the external air is received by using an air receiving apparatus, and the received air is conducted into an air pre-processing apparatus; the air pre-processing apparatus is used to process the air received by the air receiving apparatus, so as to obtain processed air, and the processed air is conducted into the gas separation apparatus; the gas separation apparatus is used to perform high-pressure adsorption on nitrogen in the processed air, partial first target gas remained after high-pressure adsorption is discharged from a second gas outlet, and the high-pressure adsorbed nitrogen is released after discharging the partial first target gas, so as to obtain a second target gas; the second target gas is returned to the air pre-processing apparatus by using a residual gas return channel, and cyclic processing is performed in combination with the air received by the air receiving apparatus; an oxygen concentration in the second target gas after cyclic processing is detected by using an oxygen concentration sensor on a low-oxygen gas output apparatus of the residual gas return channel; and a third target gas is obtained when the oxygen concentration sensor detects that a current oxygen concentration reaches a target oxygen concentration, and a speed control valve on the low-oxygen gas output apparatus is opened to output the third target gas.

Optionally, the method further includes: a speed control valve on the air receiving apparatus and an opening degree of the speed control valve on the low-oxygen gas output apparatus are adjusted according to the current oxygen concentration detected by the oxygen concentration sensor on the low-oxygen gas output apparatus and the target oxygen concentration.

Optionally, the method further includes: when the second gas outlet of the gas separation apparatus connects with a first target gas output module and a speed control valve is disposed on the first target gas output module, an opening degree of the speed control valve on the first target gas output module is adjusted according to the current concentration detected by the oxygen concentration sensor on the low-oxygen gas output apparatus and the target oxygen concentration.

Optionally, the third target gas is applied to post-processing of 3D printing as a curing protection gas.

Another aspect of the present invention provides a method for preparing a gas. **The** method includes: the external air is received by using an air receiving apparatus, and the received air is conducted into an air pre-processing apparatus; the air pre-processing apparatus is used to process the air received by the air receiving apparatus, so as to obtain processed air, and the processed air is conducted into the gas separation apparatus; and the gas separation apparatus is used to perform high-pressure adsorption on nitrogen in the processed air, and partial first target gas remained after high-pressure adsorption is discharged from a second gas outlet.

Optionally, when the second gas outlet of the gas separation apparatus connects with a first target gas output module, and a speed control valve is disposed on the first target gas output module, the method further includes: the speed control valve on the first target gas output module is opened to output the first target gas when an oxygen concentration sensor on the first target gas output module detects that a current oxygen concentration reaches a target oxygen concentration.

Optionally, the method further includes: a speed control valve on the air receiving apparatus and an opening degree of the speed control valve on the first target gas output module are adjusted according to the current oxygen concentration detected by the oxygen concentration sensor on the first target gas output module and the target oxygen concentration.

Optionally, when a pressure difference unit is disposed on the first target gas output module, the method further includes: an air pressure of the first target gas is detected based on the pressure difference unit, and the pressure difference unit is used to control the speed control valve on the first target gas output module and an opening degree of the speed control valve on the air receiving apparatus based on the air pressure of the first target gas.

Optionally, the first target gas is configured to supply oxygen to a printing process for 3D printing.

Another aspect of the present invention provides a method for preparing a gas. **The** method includes: the external air is received by using an air receiving apparatus, and the received air is conducted into an air pre-processing apparatus; the air pre-processing apparatus is used to process the air received by the air receiving apparatus, so as to obtain processed air, and the processed air is conducted into the gas separation apparatus; the gas separation apparatus is used to perform high-pressure adsorption on nitrogen in the processed air, partial first target gas remained after high-pressure adsorption is discharged from a second gas outlet, and the high-pressure adsorbed nitrogen is released after discharging the partial first target gas, so as to obtain a second target gas; the second target gas is returned to the air pre-processing apparatus by using a residual gas return channel, and cyclic processing is performed in combination with the air received by the air receiving apparatus; an oxygen concentration in the second target gas after cyclic processing is detected by using an oxygen concentration sensor on a low-oxygen gas output apparatus of the residual gas return channel; and a third target gas is obtained when the oxygen concentration sensor on the low-oxygen gas output apparatus detects that a current oxygen concentration is a low-oxygen gas target oxygen concentration, and a speed control valve on the low-oxygen gas output apparatus is opened to output the third target gas.

Optionally, when the second gas outlet of the gas separation apparatus connects with a first target gas output module, and a speed control valve is disposed on the first target gas output module, the method further includes: the speed control valve on the first target gas output module is opened to output the first target gas when an oxygen concentration sensor on the first target gas output module detects that a current oxygen concentration is an oxygen-enriched gas target oxygen concentration.

Optionally, the method further includes: an opening degree of the speed control valve on the low-oxygen gas output apparatus is adjusted according to the current oxygen concentration detected by the oxygen concentration sensor on the low-oxygen gas output apparatus and the low-oxygen gas target oxygen concentration.

Optionally, the method further includes: an opening degree of the speed control valve on the first target gas output module is adjusted according to the current oxygen concentration detected by the oxygen concentration sensor on the first target gas output module and the oxygen-enriched gas target oxygen concentration.

Optionally, when a pressure difference unit is disposed on the first target gas output module, the method further includes: an air pressure of the first target gas is detected based on the pressure difference unit, and the pressure difference unit is used to control an opening degree of the speed control valve on the first target gas output module based on the air pressure of the first target gas.

Optionally, the third target gas is applied to post-processing of 3D printing as a curing protection gas, and the first target gas is configured to supply oxygen to a printing process for 3D printing.

In the embodiments of the present invention, by means of achieving the communication between the controller and the 3D printer and the gas separation apparatus, in an aspect, the controller may communicate with the 3D printer for 3D printer, and the controller may also communicate with the gas separation apparatus, such that the gas separation apparatus can separate the first target gas from the air received from the outside of the gas separation apparatus according to the received control instruction, and transport the first target gas to the 3D printer, so as to facilitate the 3D printer to achieve a better printing effect, thereby solving the technical problem that there is no stable gas supply apparatus suitable for 3D printing in the related art.

Furthermore, in the embodiments of the present invention, based on the air receiving apparatus, the air pre-processing apparatus, the gas separation apparatus, the residual gas return channel, the low-oxygen gas output apparatus, and connection relationships between the apparatuses, the gas supply assembly may receive the air from the outside of the gas separation apparatus. After the air is processed, the gas separation apparatus is configured to adsorb the nitrogen in the processed air. The processed air is divided into the first target gas with a high oxygen concentration and the second target gas with a low oxygen concentration. The second target gas returns to the air pre-processing apparatus through the residual gas return channel and is subjected to cyclic processing processes of air processing, high-pressure nitrogen adsorption, etc. again together with the air received from the outside of the gas separation apparatus. During the processes, the gas separation apparatus in the gas supply assembly continuously performs nitrogen adsorption on the gas flowing into the gas separation apparatus, that is, after the cyclic processing is performed for a plurality of times, the first target gas with a higher oxygen concentration and the second target gas with a lower oxygen concentration may be obtained. The second target gas circulates to the low-oxygen gas output apparatus. When the second target gas received by the low-oxygen gas output apparatus becomes the third target gas, the low-oxygen gas may be outputted by opening the speed control valve, such that the purpose of using the gas supply assembly to prepare the third target gas with a higher nitrogen concentration and the first target gas with the higher oxygen concentration. Furthermore, the gas supply assembly has no consumables within the service life, such that component replacement is not required. The overall size of the component is relatively small, more convenient use is realized. Furthermore, by adjusting the opening degree of each speed control valve in the gas supply assembly, the flow rates and concentrations of the third target gas and the first target gas may also be accurately controlled, thereby achieving the technical effect of stable gas supply, and thus solving the technical problemthat there is no stable gas supply apparatus suitable for 3D printing in the related art.

### Brief Description of the Drawings

The drawings described herein are used to provide a further understanding of the present invention, and constitute a part of the present invention. The exemplary embodiments of the present invention and the description thereof are used to explain the present invention, but do not constitute improper limitations to the present invention. In the drawings:
Fig. 1 is a schematic diagram of a 3D printing system according to embodiments of the present invention.
Fig. 2 is a schematic diagram I of a 3D printing system according to optional implementations of the present invention.
Fig. 3 is a schematic diagram II of a 3D printing system according to optional implementations of the present invention.
Fig. 4 is a flowchart of a 3D printing method according to embodiments of the present invention.
Fig. 5 is a schematic diagram of a gas supply assembly according to embodiments of the present invention.
Fig. 6 is a flowchart of a method I for preparing a gas according to embodiments of the present invention.
Fig. 7 is a flowchart of a method II for preparing a gas according to embodiments of the present invention.
Fig. 8 is a flowchart of a method III for preparing a gas according to embodiments of the present invention.
Fig. 9 is a schematic diagram of a gas supply assembly according to optional implementations of the present invention.
Fig. 10 is a schematic diagram of an assembly for preparing an oxygen-enriched gas according to optional implementations of the present invention.
Fig. 11 is a schematic diagram of air pressure feedback control according to optional implementations of the present invention.
Fig. 12 is a schematic comparison diagram of curing efficiency of 3D printing curing treatment using a gas supply assembly and conventional curing method according to optional implementations of the present invention.

### Detailed Description of the Embodiments

In order to enable those skilled in the art to better understand the solutions of the present invention, the technical solutions in the embodiments of the present invention will be clearly and completely described below in combination with the drawings in the embodiments of the present invention. It is apparent that the described embodiments are only part of the embodiments of the present invention, not all the embodiments. All other embodiments obtained by those of ordinary skill in the art on the basis of the embodiments in the present invention without creative work shall fall within the scope of protection of the present invention.

It is to be noted that terms "first", "second" and the like in the description, claims and the above mentioned drawings of the present invention are used for distinguishing similar objects rather than describing a specified sequence or a precedence order. It should be understood that the data used in such a way may be exchanged where appropriate, in order that the examples of the present invention described here can be implemented in an order other than those illustrated or described herein. In addition, terms "include" and "have" and any variations thereof are intended to cover non-exclusive inclusions. For example, it is not limited for processes, methods, systems, products or devices containing a series of steps or units to clearly list those steps or units, and other steps or units which are not clearly listed or are inherent to these processes, methods, products or devices may be included instead.

During light-curing 3D printing of a DLP technology, printing forming surfaces are on a material tray and a forming platform, a light-curing resin is cured by receiving an UV light from a bottom that projects a specific image to carry out a cross-linking reaction. The cured resin will adhere to the forming platform and the material tray. When exposure is required to cure a next layer, the forming platform needs to be risen to separate the cured resin from the material tray. After separation is completed, the forming platform then descends to a height of one layer thickness from the material tray. Then, UV light projection is performed for curing, and the step is repeated to complete the printing of a three-dimensional model. In the above process, an adhesion force is generated between the material tray and the cured resin, and needs to be overcome during peeling, so as to separate the resin from the material tray. If the adhesion force is larger, the printing efficiency of 3D printing is reduced. In order to reduce the peeling force, an oxygen-enriched region may be formed between the resin and the material tray. Due to oxygen inhibition, the resin between the cured resin and the material tray is not cured due to oxygen inhibition, so as to reduce the adhesion force, thereby improving the efficiency of 3D printing. From the above, it is learned that, in order to reduce the adhesion force, one oxygen-enriched region is required, such that an oxygen supply device needs to be provided for a 3D printer.

At present, mature methods for preparing oxygen from air include a low-temperature distillation method, a membrane separation method, and a pressure swing adsorption method.

The low-temperature distillation method is to liquefy the air through air compression and cooling, and continuously perform gas-liquid contact and heat exchange in a distillation tower by using characteristics of different boiling points of oxygen and nitrogen components, so as to separate oxygen with a high boiling point from nitrogen with a low boiling point. This method is large in production quantity, large in investment, high in energy consumption, and complex in operation, can only be used for the field of large-scale oxygen preparation, and is not suitable for the use of 3D printing.

The membrane separation method is to generate gas pressures on two ends of a separation membrane, and under the driving of the pressures, perform gas separation by using the adsorption capacities of elements on a surface of a polymer membrane and the difference between dissolution and diffusion in the membrane. The membrane separation method is simple, convenient in operation, and high in operation reliability. However, the oxygen concentration can only reach 40-50%. Furthermore, the membrane is high in price, high in cleanliness requirement for input air, and strict in requirement for degree of purification, such that the method is not suitable for the use of 3D printing.

The Pressure Swing Adsorption (PSA) method is to separate oxygen and nitrogen in the air by selectively adsorbing oxygen and nitrogen molecules in the air based on a molecular sieve, and perform oxygen nitrogen separation by using the adsorption capacity of the molecular sieve for nitrogen being greater than that for oxygen. This method can rapidly and conveniently produce oxygen, and is low in cost, simple in operation, simple in device, high in operation reliability, and small in volume. The oxygen concentration may be up to 95%. The method is suitable for the use of oxygen-enriched devices provided in 3D printing.

PSA oxygen preparation method is used for an oxygen generator in the medical industry, and provides high-concentration oxygen to patients for breathing. A PSA oxygen preparation system architecture and overall solutions used in the 3D printing industry are different from that in the medical industry. Conventional medical industry oxygen preparation machines all perform preparation based on human demands, which is characterized by a large oxygen output volume, an output airflow pressure of the oxygen is not controllable, the humidification or atomization function is increased for the human body inhalation of oxygen demand, the volume is large, and the cost is high. For an oxygen preparation device used for 3D printing, stable oxygen output is required, controllable airflow and air pressure output are required, a high oxygen concentration is required, and a small air flow rate is required. In a conventional household PSA oxygen preparation device, since a user does not use the device for a long time, a gas inlet is not dried, and non-dry gases enter the molecular sieve, resulting in early reduction in the service life of the molecular sieve, such that the oxygen concentration cannot be ensured.

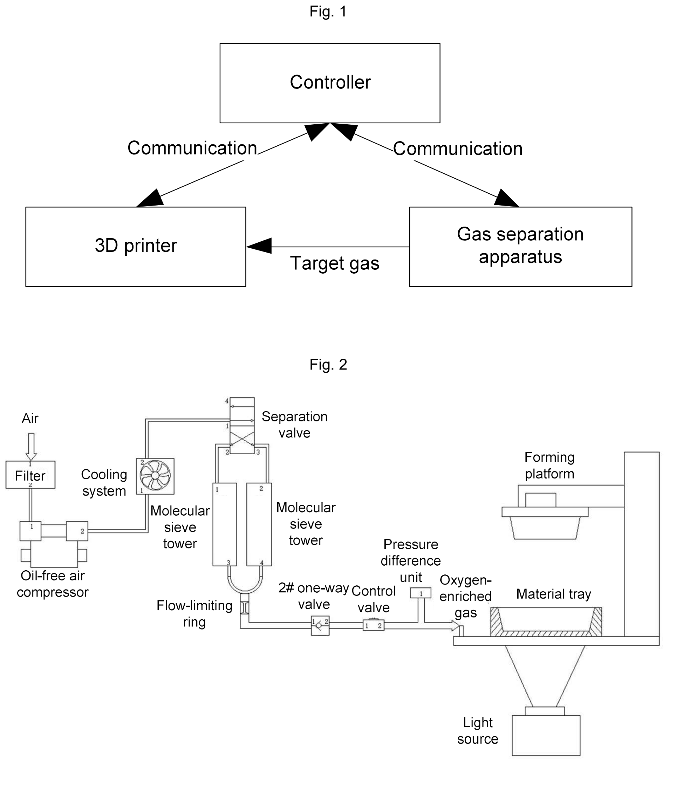

In view of the above problems, embodiments of the present invention provide a 3D printing system embodiment. Fig. 1 is a schematic diagram of a 3D printing system according to embodiments of the present invention. As shown in Fig. 1, the system includes a 3D printer, a controller, and a gas separation apparatus. The controller communicates with the 3D printer, and is configured to control the 3D printer to perform 3D printing. The controller also communicates with the gas separation apparatus, and is configured to generate a control instruction according to a preset control policy and send same to the gas separation apparatus. The gas separation apparatus is configured to, based on the received control instruction, separate air received from outside of the gas separation apparatus to obtain a first target gas, so as to transport same to the 3D printer.

In the embodiments of the present invention, by means of achieving the communication between the controller and the 3D printer and the gas separation apparatus, in an aspect, the controller may communicate with the 3D printer for 3D printer, and the controller may also communicate with the gas separation apparatus, such that the gas separation apparatus can separate the first target gas from the air received from the outside of the gas separation apparatus according to the received control instruction, and transport the first target gas to the 3D printer, so as to facilitate the 3D printer to achieve a better printing effect, thereby solving the technical problemthat there is no stable gas supply apparatus suitable for 3D printing in the related art.

It is to be noted that, the controller may be a built-in controller of the 3D printer, or may be a controller on the gas separation apparatus, or may also be an independent controller.

The controller in the embodiments of the present invention may generate the control instruction according to the preset control policy. The control instruction generated by the controller may be configured to control the gas separation apparatus to start or stop the transportation of the first target gas. Controlling the gas separation apparatus to start or stop the transportation of the first target gas may be performed at any required moment, and is described below with examples.

For example, the control policy may be configured to: in response to a start operation triggered by a user or timed start operation, generate and send a first control instruction to the gas separation apparatus, where the first control instruction includes starting an operation of transportation of the first target gas; and in response to a closing operation triggered by the user or timed closing operation, generate and send a second control instruction to the gas separation apparatus, where the second control instruction includes stopping an operation of the transportation of the first target gas. Through the operation (the operation may be real time or timed) triggered based on a user, based on requirements of the user, the starting or stopping the inputting of the first target gas to the gas separation apparatus may be controlled. By using the above processing, the use and prohibition of the first target gas can be effectively flexibly controlled based on the requirements of the user.

For another example, the control policy may also be configured to: generate and send a first control instruction to the gas separation apparatus when detecting that the 3D printer being in an operation state, where the first control instruction includes starting an operation of transportation of the first target gas; and generate and send a second control instruction to the gas separation apparatus when detecting that the 3D printer being not in the operation state, where the second control instruction includes stopping an operation of the transportation of the first target gas. Through the above processing, the inputting of the first target gas to the gas separation apparatus is started or stopped based on the operation state of the 3D printer, such that whether to input the first target gas to the gas separation apparatus is triggered under the operation state of the 3D printer. The operation of transporting the first target gas is started when the 3D printer is in the operation state, and the operation of transporting the first target gas is stopped when the 3D printer is not in the operation state, such that the transportation of the first target gas is intelligently controlled based on the state of the 3D printer.

Whether the 3D printer is in the operation state or not in the operation state may be determined based on each component of the 3D printer or the overall state. For example, it is determined that the 3D printer is in the operation state when detecting one or more of: the 3D printer is powered on, a light source of the 3D printer starts to transmit light, a forming platform of the 3D printer descends for a nth time, a printing task start instruction is received, or a printing material of the 3D printer reaches a preset position. It indicates that the 3D printer needs to start 3D printing, the first target gas needs to be outputted by the gas separation apparatus to the 3D printer, so as to form an oxygen-enriched region between a resin and a material tray, such that the current control policy is to generate the first control instruction, and the first control instruction is configured to start the operation of transporting the first target gas. It is determined that the 3D printer is not in the operation state when detecting one or more of: the 3D printer is powered off, the light source of the 3D printer stops to transmit light, the forming platform of the 3D printer descends for an mth time (m and n are integers, and m is greater than n), a printing task stop instruction is received, or the printing material of the 3D printer is lower than the preset position. It indicates that the 3D printer has completed 3D printing, the first target gas is no longer to be outputted continuously by the gas separation apparatus to the 3D printer, such that the current control policy is to generate the second control instruction, and the second control instruction is configured to stop the operation of transporting the first target gas.

It is to be noted that, the powering on of the 3D printer, the starting of exposure of the light source, the descending of the forming platform, the starting of a printing task, and the position in which the printing material reaches may all be determined based on corresponding detection devices or by receiving corresponding operation instructions. For example, power on, exposure, descending, and the starting of the printing task may be all related to corresponding instructions, and corresponding operations may be determined based on the corresponding instructions. Liquid level detection may be performed based on a sensor. For example, when a liquid level sensor detects that a liquid level reaches a preset position, it is determined that printing may start, that is, the operation state is entered. Furthermore, it is noted that, the above various determination objects may be determined based on one of the above, and may definitely be determined based on various combinations, which depends on the specific determination accuracy requirements.

**The** control instruction generated by the controller in the embodiments of the present invention according to the preset control policy may also be configured to control the gas separation apparatus to increase or reduce the transported first target gas. For example, the control policy may be configured to perform: when detecting one or more of: a release film of the 3D printer is higher than a preset calibration position, an air pressure of the first target gas in the 3D printer is higher than a preset air pressure range, airflow of the first target gas in the 3D printer is higher than a preset range, a concentration of the first target gas in the 3D printer is higher than a preset concentration range, or a lower surface bearing force of the release film of the 3D printer is greater than an upper surface bearing force, it indicates that the gas separation apparatus has currently transported excess first target gas to the 3D printer, and the air pressure and oxygen concentration of the first target gas that are formed in the 3D printer need to be adjusted, such that the current control policy is to generate the third control instruction, and the third control instruction is configured to reduce the transportation of the first target gas. When detecting one or more of: the release film of the 3D printer is lower than the preset calibration position, the air pressure of the first target gas in the 3D printer is lower than the preset air pressure range, the airflow of the first target gas in the 3D printer is lower than the preset range, the concentration of the first target gas in the 3D printer is lower than the preset concentration range, or the upper surface bearing force of the release film of the 3D printer is less than the lower surface bearing force, it indicates that the gas separation apparatus has currently transported too little of the first target gas to the 3D printer, which may affect a curing effect of the resin material and make the resin material difficult to peel off the material tray, and the air pressure and oxygen concentration of the first target gas that are formed in the 3D printer need to be adjusted, such that the current control policy is to generate the fourth control instruction, and the fourth control instruction is configured to increase the transportation of the first target gas.

It is to be noted that, the height of the release film, the air pressure, airflow, and concentration of the gas, and the lower surface bearing force of the release film may all be directly collected based on corresponding sensors, or may also be obtained after data processing is performed based on data collected by the sensors. For example, in order to acquire the upper surface bearing force of the release film of the 3D printer, the volume of the printing material may be obtained through detection, and the surface bearing force of the release film may be determined after the volume is converted into weight. And by disposing a weighing sensor at the bottom of the material tray, a total weight of the material tray and the printing material is detected, such that the surface bearing force of the release film may be determined. That is, an action and a reaction between an upper surface and a lower surface of a membrane are balanced. Furthermore, since the above projection technology may be performed without a membrane or oxygen, projection is not taken into consideration, such that the upper surface and the small surface are used for description.

As an optional embodiment, the gas separation apparatus is disposed in the 3D printer or is disposed separately and independently from the 3D printer. A mounting position of the gas separation apparatus may be selected according to actual application. The gas separation apparatus may be disposed in the 3D printer, or may be disposed separately and independently from the 3D printer, or may also be disposed in the 3D printer but is detachable, etc.

As an optional embodiment, the gas separation apparatus includes an air receiving apparatus, a gas separation module, and a first target gas output module. The air receiving apparatus is configured to receive and respond to the control instruction from the controller. The air receiving apparatus starts receiving air from the outside of the gas separation apparatus when receiving the first control instruction, and the air receiving apparatus stops receiving the air from the outside of the gas separation apparatus when receiving the second control instruction. The gas separation module is configured to separate the air to obtain the first target gas and transport same to the first target gas output module. **The** first target gas output module is configured to output the first target gas to the 3D printer when receiving the first target gas.

When the air receiving apparatus receives the first control instruction from the controller, it indicates that the gas separation apparatus is required to prepare the first target gas, the air receiving apparatus starts receiving the air from the outside of the gas separation apparatus in response to the first control instruction, and the first target gas may be obtained by passing the air through the gas separation apparatus as a raw material gas. When the air receiving apparatus receives the second control instruction from the controller, it indicates that the gas separation apparatus is no longer required to prepare the first target gas, the air receiving apparatus stops receiving the air from the outside of the gas separation apparatus in response to the second control instruction. Similarly, when the air receiving apparatus receives the third control instruction, it indicates that the transportation of the first target gas needs to be reduced, or may be implemented by controlling the air receiving apparatus to reduce the amount of the air received from the outside of the gas separation apparatus. When the air receiving apparatus receives the fourth control instruction, it indicates that the transportation of the first target gas needs to be increased, or may be implemented by controlling the air receiving apparatus to increase the amount of the air received from the outside of the gas separation apparatus.

The gas separation module receives the air from an air receiving module, and separates the air according to gas components, for example, separates nitrogen, oxygen, etc. from the air, such that the first target gas may be obtained. The first target gas may be accurately transported to the oxygen-enriched region formed between the cured resin and the material tray in the 3D printer through the first target gas output module, so as to facilitate 3D printing.

As an optional embodiment, a pressure difference unit is disposed on the first target gas output module; and the pressure difference unit is configured to detect an air pressure of the first target gas and send same to the controller. The air pressure when the first target gas is outputted may be monitored by the pressure difference unit on the first target gas output module, and an air pressure monitoring result is sent to the controller. The controller may control an opening device of a speed control valve of the first target gas output module by acquiring a preset air pressure value and in combination with a monitored output air pressure of the first target gas, so as to achieve a desired output air pressure of the first target gas.

As an optional embodiment, a gas concentration sensor is disposed on the first target gas output module; and the gas concentration sensor is configured to detect a concentration of the first target gas and send same to the controller. By disposing the gas concentration sensor on the first target gas output module, a gas concentration when the first target gas is outputted may be monitored, for example, an oxygen concentration of the first target gas, and a gas concentration monitoring result is sent to the controller. The controller may control the opening device of the speed control valve on the first target gas output module by acquiring a preset gas concentration value and in combination with a detected gas concentration of the first target gas, so as to achieve a desired concentration of the first target gas.

As an optional embodiment, the 3D printer includes a material tray, and a release film and an inflation cavity, which are disposed at a bottom of the material tray; the release film is disposed above the inflation cavity; the inflation cavity is configured to accommodate the first target gas; a position sensor is disposed on the material tray; and the position sensor is configured to detect position data of the release film and send same to the controller.

The first target gas output module transports the first target gas to the inflation cavity. The inflation cavity forms the oxygen-enriched region near the release film by using the first target gas in the cavity. The position sensor disposed on the material tray may be configured to detect a position of the release film, and send the position data of the release film to the controller. The controller may determine whether the position of the release film is higher than the preset calibration position according to the position data. If so, the controller may send the third control instruction to the gas separation apparatus, so as to reduce the first target gas transported by the gas separation apparatus; and if no, the controller may send the fourth control instruction to the gas separation apparatus, so as to increase the first target gas transported by the gas separation apparatus.

As an optional embodiment, the gas separation apparatus includes one or more of a nitrogen adsorption module or a nitrogen separation module. When the gas separation apparatus performs gas separation on the air from the air receiving apparatus, nitrogen in the air may be adsorbed and/or separated by the nitrogen adsorption module and/or the nitrogen separation module, such that the proportion of oxygen in the residual gas increases, so as to obtain the oxygen-enriched first target gas.

As an optional embodiment, the first target gas includes an oxygen-enriched gas, and the gas separation module includes the nitrogen adsorption module. The nitrogen adsorption module connects with the first target gas output module, and the nitrogen adsorption module is configured to transport residual gases after nitrogen adsorption to the first target gas output module.

As an optional embodiment, the first target gas includes a nitrogen-enriched gas. The gas separation module includes the nitrogen adsorption module. The nitrogen adsorption module is provided with an oxygen-enriched gas discharge port. The nitrogen adsorption module connects with the first target gas output module. The nitrogen adsorption module is configured to discharge the residual gas after nitrogen adsorption via the oxygen-enriched gas discharge port, then release the high-pressure adsorbed nitrogen, and transport the released gas to the first target gas output module. After the nitrogen adsorption module adsorbs the nitrogen in the air, the concentration of the oxygen in the residual gas increases, becoming the oxygen-enriched gas, which is the first target gas. The first target gas is discharged via the oxygen-enriched gas discharge port on the nitrogen adsorption module, and then the nitrogen adsorbed by the nitrogen adsorption module is released, such that the nitrogen adsorption module performs next nitrogen adsorption after mixing gas after releasing with air received the outside of the gas separation apparatus.

As an optional embodiment, the nitrogen adsorption module includes a separation valve and a molecular sieve tower. The separation valve is configured to control a gas circulation route in the nitrogen adsorption module. The separation valve is provided with a gas inlet configured to receive the air, an air vent configured to allow the air to flow to the molecular sieve tower, and an exhaust port configured to exhaust residual gas. The molecular sieve tower is configured to perform high-pressure adsorption on the nitrogen in the air, so as to obtain the residual gases after high-pressure adsorption, and release high-pressure adsorbed nitrogen.

The air enters via the gas inlet of the separation valve, and in this case, the gas inlet of the separation valve connects with the air vent of the separation valve. The air enters the molecular sieve tower via the air vent of the separation valve to perform a high-pressure nitrogen adsorption operation. The residual gas after high-pressure adsorption enters the first target gas output module via the oxygen-enriched gas discharge port. After the molecular sieve tower performs high-pressure nitrogen adsorption, depressurization and releasing needs to be performed, and in this case, the air vent of the separation valve connects with the exhaust port of the separation valve, such that one adsorption cycle is completed, then the gas inlet of the separation valve connects with the air vent of the separation valve, so as to perform high-pressure nitrogen adsorption again, etc., so as to complete division of the air according to different gas components, thereby respectively obtaining the residual gas and the oxygen-enriched gas.

As an optional embodiment, the gas separation apparatus may further include a flow-limiting ring; and the flow-limiting ring is configured to limit a flow rate of the first target gas when the first target gas is discharged from the oxygen-enriched gas discharge port.

As an optional embodiment, at least two molecular sieve towers are disposed, and the air vent of the separation valve is configured to be switched between the at least two molecular sieve towers. By disposing the plurality of molecular sieve towers in the nitrogen adsorption module, the plurality of molecular sieve towers may be used to perform high-pressure nitrogen adsorption on the air at the same time, so as to realize rapid preparation of the first target gas, or the plurality of molecular sieve towers may also be used to cyclically and alternately perform high-pressure nitrogen adsorption on the air, so as to realize continuous preparation of the first target gas, etc.

As an optional embodiment, the molecular sieve towers include a first molecular sieve tower and a second molecular sieve tower; the air vent of the separation valve includes a first air vent and a second air vent; and the first air vent connects with the first molecular sieve tower, and the second air vent connects with the second molecular sieve tower. In order to improve the gas preparation efficiency of the gas supply assembly, there may be a plurality of molecular sieve towers disposed in the nitrogen adsorption module. For example, the molecular sieve towers include the first molecular sieve tower and the second molecular sieve tower. Correspondingly, a connected joint between the separation valve and the molecular sieve tower, which is the air vent, also correspondingly includes the first air vent and the second air vent.

As an optional embodiment, in a first state, the separation valve controls the gas inlet to connect with the first air vent, and the second air vent to connect with the exhaust port; in a second state, the separation valve controls the gas inlet to connect with the second air vent, and the first air vent to connect with the exhaust port; and the separation valve is cyclically switched between the first state and the second state according to a predetermined cycle. In order to improve the gas preparation efficiency of the gas supply assembly, in this embodiment, the first molecular sieve tower and the second molecular sieve tower need to perform high-pressure nitrogen adsorption and nitrogen releasing through depressurization in turn, and in order to ensure that the process can be performed orderly, the separation valve in this embodiment is a two-position four-way valve, which may switch a circulation route therein according to two states.

As an optional embodiment, when the first molecular sieve tower performs high-pressure adsorption on the nitrogen in the air, and the second molecular sieve tower performs pressure equalizing on the first molecular sieve tower, causing the first molecular sieve tower to reduce a pressure to release the high-pressure adsorbed nitrogen; and when the second molecular sieve tower performs high-pressure adsorption on the nitrogen in the air, and the first molecular sieve tower performs pressure equalizing on the second molecular sieve tower, causing the second molecular sieve tower to reduce a pressure to release the high-pressure adsorbed nitrogen.

Under the first state of the separation valve, the air enters the first molecular sieve tower for pressurization through the first air vent of the separation valve, and the first molecular sieve tower adsorbs the nitrogen in a high-pressure state, so as to obtain the oxygen-enriched gas. Since the first molecular sieve tower and the second molecular sieve tower are in a communication state, in this case, the first molecular sieve tower performs pressure equalizing on the second molecular sieve tower, facilitating depressurization of the first molecular sieve tower to discharge the adsorbed nitrogen. The first molecular sieve tower is depressurized and desorbed, in this case, the separation valve is in the second state, the nitrogen adsorbed by the first molecular sieve tower is discharged, and is discharged via the exhaust port of the separation valve, and the first molecular sieve tower is regenerated for the next nitrogen adsorption. While the first molecular sieve tower performs depressurization and desorption, the second molecular sieve tower is currently performing high-pressure nitrogen adsorption. For the remaining oxygen-enriched gas after the second molecular sieve tower adsorbs the nitrogen, one portion is discharged from the oxygen-enriched gas discharge port, and one portion flows into the first molecular sieve tower. The first molecular sieve tower is washed such that the nitrogen in the first molecular sieve tower may be rapidly discharged, and residual nitrogen in an adsorbent in the first molecular sieve tower is removed, thereby improving the reproductive capability of the molecular sieve tower, and improving the adsorption performance on the nitrogen. High-pressure adsorption and depressurization and desorption processes of the second molecular sieve tower are similar to those of the first molecular sieve tower, and are not described herein again. The first molecular sieve tower and the second molecular sieve tower cyclically perform the above treatment on the air in turn, such that the residual gas and the oxygen-enriched gas may be effectively obtained.

As an optional embodiment, the gas separation apparatus further includes an adjustment assembly; and the adjustment assembly is configured to limit a flow rate and/or direction of the first target gas when the first target gas is transported to the first target gas output module. The adjustment assembly on the gas separation apparatus may receive the control instruction from the controller, and in response to the control instruction, adjust the flow rate and/or direction when the first target gas is transported to the first target gas output module.

As an optional embodiment, the adjustment assembly includes one or more of a flow-limiting ring, a speed control valve, a pressure regulating valve, a one-way valve, or a flow-limiting valve.

The flow-limiting ring may be configured to limit the flow rate when the residual gas is transported to the first target gas output module. The first molecular sieve tower and the second molecular sieve tower may connect with each other through the flow-limiting ring. On the one hand, it may ensure that the first molecular sieve tower and the second molecular sieve tower may allow the remaining oxygen-enriched gas after high-pressure nitrogen adsorption to be able to enter the first target gas output module via the flow-limiting ring, and on the other hand, pressure equalizing between the first molecular sieve tower and the second molecular sieve tower may be promoted.

As an optional embodiment, a speed control valve and/or a one-way valve is disposed in the air receiving apparatus.

By changing an opening degree of the speed control valve on the air receiving apparatus, the speed of the air flowing into the gas separation apparatus may be controlled, and at the same time, the oxygen concentration of the first target gas may also be controlled. For example, if the flow speed of the air is slower, the time for the nitrogen adsorption module to adsorb the nitrogen in the air is longer, and the oxygen concentration of the first target gas transported to a first target gas output apparatus is higher. The one-way valve only allows the air outside the gas separation apparatus to enter the gas separation apparatus as the raw material gas, and does not allow the first target gas to return to the outside of the gas separation apparatus via the air receiving apparatus, such that it ensures that the first target gas can be smoothly transported to the first target gas output module.

It is to be noted that, the above speed control valves may be replaced with electric speed control valves.

As an optional embodiment, the gas separation apparatus further includes a filter, an oil-free air compressor, and a cooling unit. The filter is configured to filter dust and water vapor in the air, so as to obtain filtered air. The air compressor is configured to increase a gas pressure of the filtered air, and accelerate a gas flow rate of the filtered air, so as to obtain compressed air. The cooling unit is configured to cool the compressed air to obtain processed air.

The filter is configured to filter the dust and water vapor in the air, thereby effectively prolonging the service life of the nitrogen adsorption module. The clean and dry gas, which is the filtered air, flows to the oil-free air compressor after passing through the filter, and the oil-free air compressor may increase a gas pressure and accelerate the flow rate of the air. After the air is subjected to pressurization and acceleration, a temperature increases, and then a cooling system is used to cool the compressed air, so as to ensure that a temperature of the processed air cannot be too high.

As an optional embodiment, the gas separation apparatus in the system is configured to separate the gas, and the separated different gases may be used for different purposes. For example, the gas separation apparatus may be configured to separate enriched oxygen for 3D printing, or may also be configured to separate low oxygen for post-processing of 3D printing.

As an optional embodiment, the system further includes a residual gas return channel and a low-oxygen gas output apparatus. The gas separation apparatus is further configured to separate the external air and/or oxygen in a second target gas returned in the residual gas return channel, so as to obtain a third target gas. The residual gas return channel is configured to return the second target gas to the air receiving apparatus. The low-oxygen gas output apparatus is configured to output the third target gas when receiving the third target gas. Based on the above structure, the gas separation apparatus may not only provide the oxygen-enriched gas for 3D printing, but also output the low oxygen gas based on the separation treatment, such that the two gases that are separated based on the gas separation apparatus and are used for 3D printing treatment processes are achieved, that is, low costs and efficient 3D printing are realized.

As an optional embodiment, the gas separation apparatus is provided with a first gas outlet and a second gas outlet; and the second target gas is discharged via the first gas outlet, and flows to the air pre-processing apparatus through the residual gas return channel. Through the arrangement of the gas outlet, the second target gas with a higher oxygen concentration can be discharged from the first gas outlet, then flow to the air pre-processing apparatus via the residual gas return channel, and converge with the pre-treated external air; and gas separation is performed again to obtain the third target gas with a lower oxygen concentration.

As an optional embodiment, the first target gas output module is configured to receive and output the first target gas that is separated by the gas separation apparatus and discharged from the second gas outlet. By disposing the first target gas output module, the oxygen concentration of the first target gas and the flow rate of the first target gas may be better controlled.

As an optional embodiment, a speed control valve configured to open an oxygen-enriched gas output channel is disposed on the first target gas output module. The speed control valve on the first target gas output module may be configured to control a gas flow rate and oxygen concentration of the oxygen-enriched gas (i.e., the first target gas). For example, if an opening degree of the speed control valve on the first target gas output module is larger, the flow rate of the first target gas is faster, and the oxygen concentration is lower, etc.

As an optional embodiment, an oxygen concentration sensor is disposed on the first target gas output module; and the oxygen concentration sensor is configured to detect an oxygen concentration of the received first target gas. The oxygen concentration sensor may be configured to monitor the oxygen concentration of the first target gas received by an oxygen-enriched output apparatus, such that the speed control valve on the oxygen-enriched output apparatus is opened to output the first target gas when ensuring that the oxygen concentration of the first target gas is high enough.

As an optional embodiment, a one-way valve configured to control an air flow direction is disposed on the first target gas output module. The one-way valve only allows the first target gas to flow out from the first target gas output module, and does not allow the external air to flow in from the first target gas output module, so as to ensure that the oxygen concentrations of the first target gas and second target gas are not affected due to the entering of the external air, thus reducing a gas supply effect.

As an optional embodiment, the pressure difference unit is further configured to control an opening degree of a speed control valve of the first target gas output module based on the air pressure of the first target gas. Through the pressure difference unit, the air pressure when the first target gas is outputted may be monitored, and the pressure difference unit may also automatically control the opening device of the speed control valve by acquiring the preset air pressure value and in combination with the monitored output air pressure of the first target gas, so as to achieve the desired output air pressure of the first target gas.

As an optional embodiment, the gas separation apparatus is configured to perform high-pressure adsorption on nitrogen in the air received in the air receiving apparatus, and discharge the remaining first target gas after high-pressure adsorption from the second gas outlet; and release the high-pressure adsorbed nitrogen after discharging the first target gas, so as to obtain the second target gas such that the second target gas returns to the gas separation apparatus through the residual gas return channel for cyclic processing.

As an optional embodiment, a speed control valve configured to open a low-oxygen gas output channel is disposed on the low-oxygen gas output apparatus. The speed control valve on the low-oxygen gas output apparatus may be completely opened such that the gas supply assembly can feed air smoothly. When the low-oxygen gas is prepared, the speed control valve on the low-oxygen gas output apparatus may be configured to control an output flow rate of the low-oxygen gas (i.e., the second target gas or the third target gas) and a nitrogen concentration of the low-oxygen gas. For example, if an opening degree of the speed control valve on the low-oxygen gas output apparatus is larger, the output flow rate of the second target gas or the third target gas is faster, and the nitrogen concentration of the second target gas or the third target gas is smaller, etc.

As an optional embodiment, an oxygen concentration sensor is disposed on the low-oxygen gas output apparatus; and the oxygen concentration sensor is configured to detect an oxygen concentration of the received third target gas. The oxygen concentration sensor may be configured to monitor the oxygen concentration of the third target gas received by a low-oxygen output apparatus, such that the speed control valve on the low-oxygen output apparatus is opened to output the third target gas when ensuring that the oxygen concentration of the residual gas is low enough.

As an optional embodiment, a one-way valve configured to control an air flow direction is disposed on the low-oxygen gas output apparatus. The one-way valve only allows the second target gas to flow to the low-oxygen gas output apparatus from the gas separation apparatus or the residual gas return channel, and does not allow the external air to flow to the gas separation apparatus or the residual gas return channel from the low-oxygen gas output apparatus, so as to ensure that after the treated gases are divided into the first target gas and the second target gas by using the gas separation apparatus, the oxygen concentrations of the first target gas and second target gas are not affected due to the entering of the external air, thus reducing the gas supply effect.

As an optional embodiment, a speed control valve configured to regulate an air inflow rate and/or a one-way valve configured to control an air flow direction are disposed on the air receiving apparatus. By changing the opening degree of the speed control valve on the air receiving apparatus, the speed of the air flowing into the gas supply assembly may be controlled, and at the same time, the oxygen concentration of the third target gas may also be controlled. For example, if the flow speed of the air is slower, the oxygen concentration of the third target gas outputted by the low-oxygen gas output apparatus is lower. The one-way valve only allows the external air to enter as the raw material gas, and does not allow the second target gas returning from the residual gas return channel to the air pre-processing apparatus to flow to the outside of the gas separation apparatus from the air receiving apparatus, thereby ensuring that the second target gas can be smoothly combined with the air received from the air receiving apparatus for cyclic processing, so as to obtain the third target gas of which oxygen concentration is low enough.

As an optional embodiment, the residual gas return channel is provided with a switch valve; and the switch valve is configured to open the residual gas return channel. By providing the switch valve on the residual gas return channel, a state of the residual gas return channel may be controlled. When the low-oxygen gas is required to be prepared, the switch valve on the residual gas return channel may be opened to allow the second target gas to return to the air pre-processing apparatus, to increase the nitrogen concentration of the gas in the gas supply assembly, so as to obtain the third target gas with a lower oxygen concentration at the low-oxygen gas output apparatus. When the switch valve on the residual gas return channel is in a close state, the second target gas no longer returns to the air pre-processing apparatus, such that the nitrogen concentration of the gas in the gas supply assembly is lower than the nitrogen concentration of the gas when the switch valve is in an open state, that is, in this case, the gas supply assembly may prepare the first target gas more efficiently.

Based on the above embodiments and optional embodiments, the present invention provides an optional implementation, which is described below.

An optional implementation of the present invention provides a 3D printing system. Fig. 2 is a schematic diagram I of a 3D printing system according to optional implementations of the present invention. Fig. 3 is a schematic diagram II of a 3D printing system according to optional implementations of the present invention. As shown in Fig. 2 and Fig. 3, a gas separation apparatus in the 3D printing system includes a filter, a compressor, a separation valve, a molecular sieve tower, a flow-limiting ring, a speed control valve, and a pressure difference unit. The process of preparing an oxygen-enriched gas based on the gas separation apparatus is introduced below.

The air flows into the filter. The filter is configured to filter dust and water vapor in the air. The dust and water vapor have a significant effect on the efficiency of preparing the oxygen-enriched gas in the molecular sieve tower, and the filter may effectively prolong the service life of the molecular sieve tower. The clean and dry gas is pressurized and accelerated by the oil-free air compressor after passing through the filter, and the oil-free air compressor is configured to increase a gas pressure and accelerate the flow rate of the air. The air enters a cooling system after being pressurized and accelerated. A temperature rises due to the pressurized air, and the cooling system is configured to reduce a temperature of the air, so as to ensure that a temperature of the outputted oxygen-enriched gas cannot be too high. The cooled air enters the separation valve after passing through the cooling system, and the separation valve is a two-position four-way valve. Port 1 is a gas inlet, Port 2 and Port 3 are ports connected to the molecular sieve tower, and Port 4 is an exhaust port. The first switching of switching logic of a valve body channel is that the Port 1 is connected to the Port 2, and at the same time, the Port 3 is connected to the Port 4; and the second switching is that the Port 1 is connected to the Port 3, and at the same time, the Port 2 is connected to the Port 4. A function of the separation valve is to cyclically switch a gas circuit in turn, and allow the pressurized air to cyclically enter the molecular sieve tower and discharge the gas inside the molecular sieve tower at the same time. The pressurized air passes through the separation valve, and then enters two inner cavities of the molecular sieve tower, respectively. Through the switching of the separation valve, adsorbed nitrogen is discharged from a gas inlet of the molecular sieve tower. The molecular sieve tower is configured to adsorb the nitrogen in the air during pressurization, and the remaining unabsorbed oxygen-enriched gas is collected and becomes the high-purity oxygen-enriched gas after being purified. The adsorbed nitrogen is discharged from the molecular sieve tower to ambient air through the separation valve when the molecular sieve tower is depressurized. The nitrogen may be adsorbed again during next pressurization, and the oxygen-enriched gas is prepared, and the entire process is a periodically dynamic cyclic process. The oxygen-enriched gas enters the flow-limiting ring after being outputted from the molecular sieve tower. The flow-limiting ring is configured to increase a pressure inside the molecular sieve tower, so as to increase a concentration of the outputted oxygen-enriched gas. The oxygen-enriched gas enters a one-way valve after passing through the flow-limiting ring. **The** one-way valve is configured to further increase the pressure inside the molecular sieve tower, so as to increase the concentration of the outputted oxygen-enriched gas and prevent backflow of the oxygen-enriched gas from being discharged at the same time. **The** oxygen-enriched gas flows through an electric speed control valve and the pressure difference unit. **The** pressure difference unit detects an air pressure outputted by the oxygen-enriched gas, and feeds back same to the electric speed control valve to adjust a flow rate in real time, so as to change the outputted air pressure. **The** electric speed control valve is configured to adjust a flow rate of a pipeline. **The** pressure difference unit monitors an air pressure of the gas circuit in real time, so as to realize closed loop feedback and adjustment of the air pressure.

**The** oxygen-enriched gas is prepared based on the gas separation apparatus, requirements for a high oxygen concentration during light-curing 3D printing may be met, and the oxygen concentration and flow rate may be controlled, a gas concentration and flow rate are accurately controlled, oxygen concentration control accuracy reaches 1%, and the accuracy of controlling the gas flow rate reaches 0.01 L/min. Furthermore, the gas separation apparatus can feed back a concentration of a gas, and perform control and adjustment according to the gas concentration, flow rate, and air pressure fed back, such that the oxygen concentration is allocated according to requirements of 3D printing, thereby realizing closed-loop control. Meanwhile, a special drying module is disposed on a gas input end of the gas separation apparatus, so as to dry the inputted air. After the air compressor compresses the air, the drying modules may be increased or reduced according to the service life, so as to ensure that the moisture content of the air inputted to the molecular sieve tower is extremely low, thereby ensuring that the service life meets requirements.

Therefore, by using the gas separation apparatus, during light-curing 3D printing, the nitrogen in the air can be separated to obtain the oxygen-enriched gas, and the oxygen-enriched gas is transported to the gas inlet of the material tray, so as to form an oxygen-enriched environment required for resin curing. Furthermore, for the requirements for the oxygen concentration, flow rate and air pressure of the oxygen-enriched gas, the gas separation apparatus in the embodiments of the present invention can not only reduce the adhesion force, but also not affect printing accuracy, can accurately adjusted the oxygen concentration, flow rate and air pressure of the oxygen-enriched gas, can be adapted to the use of various material trays and platforms without affecting the accuracy or other effects, and meet the requirements for the service life at the same time.

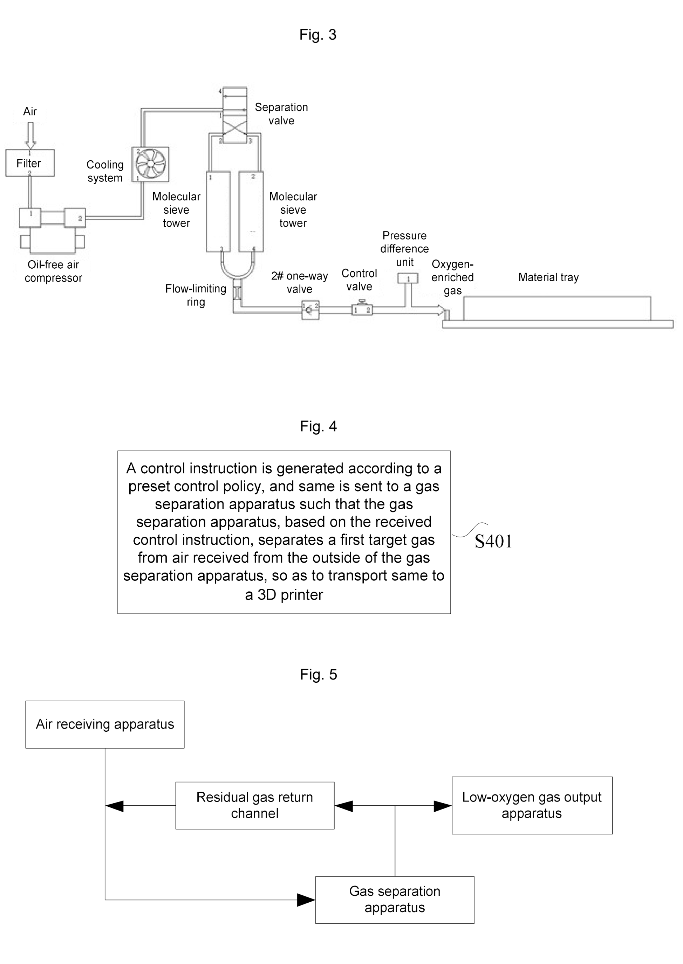

The embodiments of the present invention further provide a 3D printing method. **The** method is executed by a controller. Fig. 4 is a flowchart of a 3D printing method according to embodiments of the present invention. As shown in Fig. 4, the method includes the following steps.

At S401, a control instruction is generated according to a preset control policy, and same is sent to a gas separation apparatus such that the gas separation apparatus, based on the received control instruction, separates a first target gas from air received from the outside of the gas separation apparatus, so as to transport same to a 3D printer.

In the embodiments of the present invention, by means of achieving the communication between the controller and the 3D printer and the gas separation apparatus, in an aspect, the controller may communicate with the 3D printer for 3D printer, and the controller may also communicate with the gas separation apparatus, such that the gas separation apparatus can separate the first target gas from the air received from the outside of the gas separation apparatus according to the received control instruction, and transport the first target gas to the 3D printer, so as to facilitate the 3D printer to achieve a better printing effect, thereby solving the technical problem that there is no stable gas supply apparatus suitable for 3D printing in the related art.

As an optional embodiment, when the gas separation apparatus, based on the received control instruction, separates the first target gas from the air received from the outside of the gas separation apparatus, so as to transport same to the 3D printer, the following treatment manners may be used. The external air is received by using an air receiving apparatus, and the received air is conducted into an air pre-processing apparatus; the air pre-processing apparatus is used to process the air received by the air receiving apparatus, so as to obtain processed air, and the processed air is conducted into the gas separation apparatus; and the gas separation apparatus is used to perform high-pressure adsorption on nitrogen in the processed air, and partial first target gas remained after high-pressure adsorption is discharged from a second gas outlet, so as to transport same to the 3D printer. Through the above step, the air receiving apparatus is used to receive the external air, and after the air is treated by using the air pre-processing apparatus, the nitrogen in the processed air is adsorbed by using the gas separation apparatus, such that the first target gas with a higher oxygen concentration may be obtained at the second gas outlet.

As an optional embodiment, when the second gas outlet of the gas separation apparatus connects with a first target gas output module, and a speed control valve is disposed on the first target gas output module, the method further includes: the speed control valve on the first target gas output module is opened to output the first target gas when an oxygen concentration sensor on the first target gas output module detects that a current oxygen concentration reaches a target oxygen concentration. By connecting the first target gas output module at the second gas outlet, the oxygen concentration of the first target gas and the flow rate of the first target gas may be better controlled.

As an optional embodiment, the method further includes: a speed control valve on the air receiving apparatus and an opening degree of the speed control valve on the first target gas output module are adjusted according to the current oxygen concentration detected by the oxygen concentration sensor on the first target gas output module and the target oxygen concentration. For example, if the opening degree of the speed control valve on the first target gas output module is larger, the flow rate of the first target gas is faster, the oxygen concentration is lower, etc.

As an optional embodiment, when a pressure difference unit is disposed on the first target gas output module, the method further includes: an air pressure of the first target gas is detected based on the pressure difference unit, and the pressure difference unit is used to control the speed control valve on the first target gas output module and an opening degree of the speed control valve on the air receiving apparatus based on the air pressure of the first target gas. Through the pressure difference unit on the first target gas output module, the air pressure when the first target gas is outputted may be monitored, and the pressure difference unit may also automatically control the opening device of the speed control valve by acquiring the preset air pressure value and in combination with the monitored output air pressure of the first target gas, so as to achieve the desired output air pressure of the first target gas.

As an optional embodiment, the first target gas is configured to supply oxygen to a printing process for 3D printing.

As an optional embodiment, the method further includes: high-pressure adsorbed nitrogen is released after discharging the partial first target gas, so as to obtain a second target gas; the second target gas is returned to the air pre-processing apparatus by using a residual gas return channel, and cyclic processing is performed in combination with the air received by the air receiving apparatus; an oxygen concentration in the second target gas after cyclic processing is detected by using an oxygen concentration sensor on a low-oxygen gas output apparatus of the residual gas return channel; and a third target gas is obtained when the oxygen concentration sensor detects that a current oxygen concentration reaches a target oxygen concentration, and a speed control valve on the low-oxygen gas output apparatus is opened to output the third target gas. After the external air is received by the air receiving apparatus and the air is treated by the air pre-processing apparatus, the nitrogen in the processed air is adsorbed by using the gas separation apparatus. The processed air is divided into the first target gas with a high oxygen concentration and the second target gas with a low oxygen concentration. The second target gas returns to the air pre-processing apparatus through the residual gas return channel and is subjected to cyclic processing processes of air treatment, high-pressure nitrogen adsorption, etc. again together with the air received from the outside of the gas separation apparatus. During the processes, the gas separation apparatus continuously performs nitrogen adsorption on the gas flowing into the gas separation apparatus, that is, after the cyclic processing is performed for a plurality of times, the second target gas with a lower oxygen concentration may be obtained. The second target gas circulates to the low-oxygen gas output apparatus. When the second target gas received by the low-oxygen gas output apparatus is the third target gas, the third target gas may be outputted by opening the speed control valve.

As an optional embodiment, the method further includes: a speed control valve on the air receiving apparatus and an opening degree of the speed control valve on the low-oxygen gas output apparatus are adjusted according to the current oxygen concentration detected by the oxygen concentration sensor on the low-oxygen gas output apparatus and the target oxygen concentration. For example, if the opening degree of the speed control valve on the low-oxygen gas output apparatus is larger, the nitrogen concentration of the third target gas is lower, and the flow rate is faster; and when the opening degree of the speed control valve on the low-oxygen gas output apparatus is unchanged, if the opening degree of the speed control valve on the air receiving apparatus is smaller, the nitrogen concentration of the third target gas is higher, the flow rate is slower, etc.

As an optional embodiment, the method further includes: when the second gas outlet of the gas separation apparatus connects with a first target gas output module and a speed control valve is disposed on the first target gas output module, an opening degree of the speed control valve on the first target gas output module is adjusted according to the current concentration detected by the oxygen concentration sensor on the low-oxygen gas output apparatus and the target oxygen concentration. For example, if the opening degree of the speed control valve on the first target gas output module is larger, the flow rate of the third target gas is faster, the nitrogen concentration of the third target gas is lower, etc.

As an optional embodiment, the third target gas is applied to post-processing of 3D printing as a curing protection gas. The low-oxygen gas may be used in the field requiring low oxygen (antioxidant), such as industrial packaging, food packaging, curing treatment after 3D printing, etc. The low-oxygen gas used for the curing treatment after 3D printing is used as a curing protection atmosphere, which may prevent a resin on a surface of a printed member to be cured from generating an oxygen inhibition effect, thereby improving a curing effect and quality.

In the related art, the low-oxygen gas has rich application prospects. For example, the low-oxygen gas may be configured to store fruits and vegetables to inhibit mold growth and plant diseases and insect pests, thereby achieving a better fresh-keeping effect. By applying the low-oxygen gas to food packaging, the low-oxygen gas does not chemically react with foods and is not absorbed by the foods, and can reduce oxygen content in packaging, such that the growth and reproduction of microorganisms such as bacteria, molds, etc. are greatly inhibited to slow down oxidative deterioration and spoilage of food, thereby keeping the food fresh. Low-oxygen gas-filled packaging of food can also well prevent the extrusion of food crushing, food bonding or shrinking, so as to maintain the advantages of the food such as geometric shapes, dry, crispy, color, aroma, etc. For example, the low-oxygen gas may be supplied to a food sealing machine, and after the food is placed in a sealed container, oxygen in the container is removed by supplying the high-pressure low-oxygen gas. For example, through a low-oxygen supply and storage technology, a packaging bag may be placed in a low-oxygen environment by removing the oxygen therein, so as to reduce the impact of the oxygen on fruits and vegetables, meat products, seafood, dairy products, etc., thereby prolonging the shelf life thereof, maintaining original nutritional compositions, and maintaining original color and taste at the same time.

Meanwhile, the low-oxygen gas may further be used for low-oxygen training, that is, a low-oxygen environment at high altitude is simulated for training by using artificially created low-oxygen environments or inhalation of the low-oxygen gas. Low-oxygen fitness is a form of fitness in which the oxygen content in a gym is artificially lowered below a normal state. In the low-oxygen environment, in order to adapt to a low-oxygen and low-pressure environment, people's heart rate is accelerated, the heart's blood output is increased, and the oxygen-carrying red blood cells and hemoglobin in the blood are increased accordingly, such that the ability of the blood to transport the oxygen is enhanced, and the function of diffusing the blood to the human body tissues is inevitably improved. Thus, the utilization rate of human bodies to the oxygen increases accordingly. The low-oxygen gas may be supplied to a specific gym system for low-oxygen training.

Furthermore, the low-oxygen gas may also be used for post-curing treatment of the 3D printing, etc. The low-oxygen gas being applied to a 3D printing technology is specifically described below.

3D printing technologies are to create three-dimensional entities by using 3D printing devices in a layer-by-layer manner according to three-dimensional model data of objects. The 3D printing technologies may overcome a special structure barrier that cannot be realized by existing conventional machining, thereby realizing simplified production of any complex structural component.

The current 3D printing technologies include Stereo Lithography Appearance (SLA), Digital Light Processing (DLP), a Liquid Crystal Display (LCD) technology, Fused Deposition Modeling (FDM), Selective Laser Sintering (SLS), etc. Printed members of the 3D printing technologies such as the SLA, the DLP, the LCD, etc. are all required to be subjected to post-curing (light-curing) to cause a material to be fully cured, so as to improve the physical and mechanical properties of the material.

The curing of the light-curing resin depletes free radicals as oxygen competes with the polymerization reaction of the free radicals, which is the so-called oxygen inhibition. A 3D printed member is placed in the air for curing, a curing box is filled with the air, the oxygen content in the air is 21%, and the oxygen causes the curing of a surface of the printed member to be insufficient due to the oxygen inhibition effect, such that the surface of the printed member cannot obtain good compactness and surface hardness. Therefore, during post-processing curing, a better surface curing effect may be achieved by reducing or removing the oxygen. An oxygen insulation curing manner includes water bath light curing, solvent light curing, nitrogen aeration light curing, etc. **The** water curing is non-ideal due to resin absorbing water and a certain amount of oxygen still dissolved in the water. For the solvent curing, since a light path passes through a solvent, the light intensity reaching the cured printed member reduces, and the solvent may also reduce the curing effect by absorbing water or dissolving the oxygen when placed in the air. Therefore, the curing effect of nitrogen aeration curing is better in the related art.

In order to reduce the oxygen concentration, in the related art, the oxygen concentration during curing is reduced by using a high-purity nitrogen method, and the traditional methods for acquiring highly concentrated nitrogen are implemented by purchasing nitrogen tanks or using large-scale nitrogen preparation devices. By using the manner of supplying the nitrogen by the nitrogen tanks, due to a large pressure inside the nitrogen tanks, household safety is not high, and the nitrogen tanks have limited storage capacities, and thus need to be replaced after being used, such that continuous nitrogen acquisition cannot be realized for a long time. A use pressure varies with a consumption amount, such that the continuous stability of gas supply is insufficient. **The** large-scale nitrogen preparation device is large in overall size, high in yield of nitrogen preparation, and not suitable for general domestic or residential use. Smaller devices are required for general domestic or residential use.

Therefore, in the related art, the oxygen concentration in the air is reduced generally by using the nitrogen tanks to supply nitrogen. However, the nitrogen tanks are poor in safety and poor in convenience during use, and are not stable enough in gas supply, and thus not suitable for general domestic or residential use. Therefore, there is a technical problem that there is no stable gas supply apparatus suitable for 3D printing in the related art.

In view of the above problems, the embodiments of the present invention provide a gas supply assembly. Fig. 5 is a schematic diagram of a gas supply assembly according to embodiments of the present invention. As shown in Fig. 5, the gas supply assembly includes an air receiving apparatus, a gas separation apparatus, a residual gas return channel, and a low-oxygen gas output apparatus. The air receiving apparatus is configured to receive external air. The gas separation apparatus is configured to separate the external air and/or oxygen in a second target gas returned in the residual gas return channel, so as to obtain a third target gas. The residual gas return channel is configured to return the second target gas to the air receiving apparatus. The low-oxygen gas output apparatus is configured to output the third target gas when receiving the third target gas.

In the embodiments of the present invention, based on the air receiving apparatus, the air pre-processing apparatus, the gas separation apparatus, the residual gas return channel, the low-oxygen gas output apparatus, and connection relationships between the apparatuses, the gas supply assembly may receive the air from the outside of the gas separation apparatus. After the air is treated, the gas separation apparatus is used to adsorb the nitrogen in the processed air. The processed air is divided into the first target gas with a high oxygen concentration and the second target gas with a low oxygen concentration. The second target gas returns to the air pre-processing apparatus through the residual gas return channel and is subjected to cyclic processing processes of air treatment, high-pressure nitrogen adsorption, etc. again together with the air received from the outside of the gas separation apparatus. During the processes, the gas separation apparatus in the gas supply assembly continuously perform nitrogen adsorption on the gas flowing into the gas separation apparatus, that is, after the cyclic processing is performed for a plurality of times, the first target gas with a higher oxygen concentration and the second target gas with a lower oxygen concentration may be obtained. The second target gas circulates to the low-oxygen gas output apparatus. When the second target gas received by the low-oxygen gas output apparatus is the third target gas, the third target gas may be outputted by opening the speed control valve, such that the purpose of using the gas supply assembly to prepare the third target gas with a higher nitrogen concentration and the first target gas with the higher oxygen concentration. Furthermore, the gas supply assembly has no consumables within the service life, such that component replacement is not required. **The** overall size of the component is relatively small, and the device is miniature, simple, and convenient in civilian use, such that more convenient use is realized. Furthermore, by adjusting the opening degree of each speed control valve in the gas supply assembly, the flow rates and concentrations of the third target gas and the first target gas may also be accurately controlled, thereby achieving the technical effect of stable gas supply, and thus solving the technical problemthat there is no stable gas supply apparatus suitable for 3D printing in the related art.

It is to be noted that, the second target gas and the third target gas in the embodiments of the present invention are both low-oxygen gases. However, the oxygen concentration of the second target gas is greater than the oxygen concentration of the third target gas. For example, the oxygen concentration of the second target gas may be 5%-21 %, and the oxygen concentration of the third target gas may be lower than 5%, such as 1%, 2%, 3%, 4%, etc. The first target gas is the oxygen-enriched gas, for example, the oxygen concentration is higher than 21%, such as oxygen concentration 30%, 40%, 50%, 60%, 70%, 80%, 90%, etc.

As an optional embodiment, the gas supply assembly further includes an air pre-processing apparatus. A gas outlet of the air receiving apparatus connects with a gas inlet of the air pre-processing apparatus, and a gas outlet of the air pre-processing apparatus connects with a gas inlet of the gas separation apparatus. By adding the air pre-processing apparatus between the air receiving apparatus and the gas separation apparatus, the received external air may be pre-treated, and then gas separation is performed to achieve a better gas separation effect, and prolong the service life of the gas supply assembly.

As an optional embodiment, the air pre-processing apparatus includes a filter, an air compressor, and a cooling unit. The filter is configured to filter dust and water vapor in the air received by the air receiving apparatus, so as to obtain filtered air. The air compressor is configured to increase a gas pressure of the filtered air, and accelerate a gas flow rate of the filtered air, so as to obtain compressed air. The cooling unit is configured to cool the compressed air to obtain processed air. The filter is configured to filter the dust and water vapor in the air, thereby effectively prolonging the service life of the gas separation apparatus. The clean and dry gas, which is the filtered air, flows to the air compressor after passing through the filter, and the air compressor may increase a gas pressure and accelerate the flow rate of the air. After the air is subjected to pressurization and acceleration, a temperature increases, and then a cooling system is used to cool the compressed air, so as to ensure that a temperature of the processed air cannot be too high.

As an optional embodiment, the gas separation apparatus is provided with a first gas outlet and a second gas outlet; and the second target gas is discharged via the first gas outlet, and flows to the air pre-processing apparatus through the residual gas return channel. The second target gas with a higher oxygen concentration can be discharged from the first gas outlet, then flow to the air pre-processing apparatus via the residual gas return channel, and converge with the pre-treated external air; and gas separation is performed again to obtain the third target gas with a lower oxygen concentration.

As an optional embodiment, the gas supply assembly further includes a first target gas output module, which is configured to receive and output a first target gas that is separated by the gas separation apparatus and discharged from the second gas outlet. In this embodiment, by disposing the first target gas output module, the oxygen concentration of the first target gas and the flow rate of the first target gas may be better controlled.

As an optional embodiment, a speed control valve configured to open an oxygen-enriched gas output channel is disposed on the first target gas output module. When the oxygen-enriched gas needs to be prepared by using the gas supply assembly, the speed control valve on the first target gas output module may be configured to control a gas flow rate and oxygen concentration of the oxygen-enriched gas (i.e., the first target gas). For example, if an opening degree of the speed control valve on the first target gas output module is larger, the flow rate of the first target gas is faster, and the oxygen concentration is lower, etc. When the low-oxygen gas needs to be prepared by using the gas supply assembly, the speed control valve on the first target gas output module may be configured to control an output flow rate of the low-oxygen gas (i.e., the second target gas or the third target gas) and a nitrogen concentration of the low-oxygen gas. For example, if an opening degree of the speed control valve on the first target gas output module is larger, the output flow rate of the second target gas or the third target gas is faster, and the nitrogen concentration of the second target gas or the third target gas is smaller, etc. When the oxygen-enriched gas and the low-oxygen gas need to be prepared by using the gas supply assembly, the speed control valve on the first target gas output module may be configured to control the oxygen concentration of the oxygen-enriched gas and the nitrogen concentration of the low-oxygen gas. For example, if the opening degree of the speed control valve on the first target gas output module is larger, the oxygen concentration of the first target gas is lower, the nitrogen concentration of the second target gas or the third target gas is higher, etc.

As an optional embodiment, an oxygen concentration sensor is disposed on the first target gas output module; and the oxygen concentration sensor is configured to detect an oxygen concentration of the received first target gas. The oxygen concentration sensor may be configured to monitor the oxygen concentration of the first target gas received by an oxygen-enriched output apparatus, such that the speed control valve on the oxygen-enriched output apparatus is opened to output the first target gas when ensuring that the oxygen concentration of the first target gas is high enough.

As an optional embodiment, a one-way valve configured to control an air flow direction is disposed on the first target gas output module. The one-way valve only allows the first target gas to flow out from the first target gas output module, and does not allow the air outside the gas supply assembly to flow into the gas supply assembly from the first target gas output module, so as to ensure that the oxygen concentrations of the first target gas and second target gas are not affected due to the entering of the external air, thus reducing a gas supply effect.

As an optional embodiment, a pressure difference unit is disposed on the first target gas output module; and the pressure difference unit is configured to detect an air pressure of the first target gas, and control an opening degree of a speed control valve of the first target gas output module based on the air pressure of the first target gas. Through the pressure difference unit on the first target gas output module, the air pressure when the first target gas is outputted may be monitored, and the pressure difference unit may also automatically control the opening device of the speed control valve by acquiring the preset air pressure value and in combination with the monitored output air pressure of the first target gas, so as to achieve the desired output air pressure of the first target gas.

As an optional embodiment, the gas separation apparatus is configured to perform high-pressure adsorption on nitrogen in the air received in the air receiving apparatus, and discharge the remaining first target gas after high-pressure adsorption from the second gas outlet; and release the high-pressure adsorbed nitrogen after discharging the first target gas, so as to obtain the second target gas such that the second target gas returns to the gas separation apparatus through the residual gas return channel for cyclic processing.

As an optional embodiment, the gas separation apparatus includes a separation valve, a molecular sieve tower, and a flow-limiting ring. **The** separation valve is configured to control a gas circulation route in the gas separation apparatus. **The** separation valve is provided with a gas inlet configured to receive the processed air, an air vent configured to allow the processed air to flow the molecular sieve tower, and an exhaust port configured to exhaust residual gas. **The** molecular sieve tower is configured to perform high-pressure adsorption on nitrogen in the processed air, and release the high-pressure adsorbed nitrogen after discharging the remaining first target gas after high-pressure adsorption from the second gas outlet, so as to obtain the second target gas. **The** flow-limiting ring is configured to limit a flow rate of the first target gas when the first target gas is discharged from the second gas outlet.

**The** processed air enters via the gas inlet of the separation valve, and in this case, the gas inlet of the separation valve connects with the air vent of the separation valve. **The** processed air enters the molecular sieve tower via the air vent of the separation valve to perform a high-pressure nitrogen adsorption operation. **The** remaining first target gas after adsorption is discharged from the second gas outlet via the flow-limiting ring. After the molecular sieve tower performs high-pressure nitrogen adsorption, depressurization and releasing needs to be performed, and in this case, the air vent of the separation valve connects with the exhaust port of the separation valve, that is, the second target gas obtained after the depressurization and releasing of the molecular sieve tower flows to the residual gas return channel via the exhaust port of the separation valve, such that one adsorption cycle is completed. After the second target gas enters the residual gas return channel, the gas inlet of the separation valve connects with the air vent of the separation valve, to perform high-pressure nitrogen adsorption again, etc., so as to complete division of the processed air according to different gas components, thereby respectively obtaining the second target gas and the first target gas.

As an optional embodiment, when the molecular sieve towers include a first molecular sieve tower and a second molecular sieve tower; the air vent of the separation valve includes a first air vent and a second air vent, the first air vent connects with the first molecular sieve tower, and the second air vent connects with the second molecular sieve tower. In order to improve the gas preparation efficiency of the gas supply assembly, there may be a plurality of molecular sieve towers disposed in the gas separation apparatus. For example, the molecular sieve towers include the first molecular sieve tower and the second molecular sieve tower. Correspondingly, a connected joint between the separation valve and the molecular sieve tower, which is the air vent, also correspondingly includes the first air vent and the second air vent.

As an optional embodiment, in a first state, the separation valve controls the gas inlet to connect with the first air vent, and the second air vent to connect with the exhaust port; in a second state, the separation valve controls the gas inlet to connect with the second air vent, and the first air vent to connect with the exhaust port; and the separation valve is cyclically switched between the first state and the second state according to a predetermined cycle. In order to improve the gas preparation efficiency of the gas supply assembly, in this embodiment, the first molecular sieve tower and the second molecular sieve tower need to perform high-pressure nitrogen adsorption and nitrogen releasing through depressurization in turn, and in order to ensure that the process can be performed orderly, the separation valve in this embodiment is a two-position four-way valve, which may switch a circulation route therein according to two states.

As an optional embodiment, the first molecular sieve tower connects with the second molecular sieve tower through the flow-limiting ring. **The** first molecular sieve tower and the second molecular sieve tower connect with each other through the flow-limiting ring. On the one hand, it may ensure that the first molecular sieve tower and the second molecular sieve tower may discharge the remaining first target gas after high-pressure nitrogen adsorption from the second gas outlet, and on the other hand, pressure equalizing between the first molecular sieve tower and the second molecular sieve tower may be promoted.

As an optional embodiment, when the first molecular sieve tower performs high-pressure adsorption on the nitrogen in the processed air, and the second molecular sieve tower performs pressure equalizing on the first molecular sieve tower, causing the first molecular sieve tower to reduce a pressure to release the high-pressure adsorbed nitrogen; and when the second molecular sieve tower performs high-pressure adsorption on the nitrogen in the processed air, and the first molecular sieve tower performs pressure equalizing on the second molecular sieve tower, causing the second molecular sieve tower to reduce a pressure to release the high-pressure adsorbed nitrogen.

Under the first state of the separation valve, the processed air enters the first molecular sieve tower for pressurization through the first air vent of the separation valve, and the first molecular sieve tower adsorbs the nitrogen in a high-pressure state, so as to obtain the first target gas. Due to the action of the flow-limiting ring, the first molecular sieve tower and the second molecular sieve tower are in a communication state, in this case, the first molecular sieve tower performs pressure equalizing on the second molecular sieve tower, facilitating depressurization of the first molecular sieve tower to discharge the adsorbed nitrogen. The first molecular sieve tower is depressurized and desorbed, in this case, the separation valve is in the second state, the nitrogen adsorbed by the first molecular sieve tower is discharged, and flows to the residual gas return channel via the exhaust port of the separation valve, and the first molecular sieve tower is regenerated for the next nitrogen adsorption. While the first molecular sieve tower performs depressurization and desorption, the second molecular sieve tower is currently performing high-pressure nitrogen adsorption. For the remaining first target gas after the second molecular sieve tower adsorbs the nitrogen, one portion is discharged from the second gas outlet via the flow-limiting ring, and one portion flows into the first molecular sieve tower. The first molecular sieve tower is washed such that the second target gas in the first molecular sieve tower may rapidly flow to the residual gas return channel, and residual nitrogen in an adsorbent in the first molecular sieve tower is removed, thereby improving the reproductive capability of the molecular sieve tower, and improving the adsorption performance on the nitrogen. High-pressure adsorption and depressurization and desorption processes of the second molecular sieve tower are similar to those of the first molecular sieve tower, and are not described herein again. The first molecular sieve tower and the second molecular sieve tower cyclically perform the above treatment on the processed air in turn, such that the second target gas and the first target gas may be effectively obtained.

As an optional embodiment, a speed control valve configured to open a low-oxygen gas output channel is disposed on the low-oxygen gas output apparatus. Similar to the speed control valve on the first target gas output module, the speed control valve on the low-oxygen gas output channel may also be configured to adjust the oxygen concentrations and flow rates of the second target gas and the third target gas, as well as the oxygen concentration of the first target gas. When the oxygen-enriched gas needs to be prepared by using the gas supply assembly, the speed control valve on the low-oxygen gas output apparatus may be completely opened such that the gas supply assembly can feed air smoothly. When the low-oxygen gas needs to be prepared by using the gas supply assembly, the speed control valve on the low-oxygen gas output apparatus may be configured to control an output flow rate of the low-oxygen gas (i.e., the second target gas or the third target gas) and a nitrogen concentration of the low-oxygen gas. For example, if an opening degree of the speed control valve on the low-oxygen gas output apparatus is larger, the output flow rate of the second target gas or the third target gas is faster, and the nitrogen concentration of the second target gas or the third target gas is smaller, etc. When the oxygen-enriched gas and the low-oxygen gas need to be prepared by using the gas supply assembly, the speed control valve on the low-oxygen gas output apparatus may be configured to control the oxygen concentration of the oxygen-enriched gas and the nitrogen concentration of the low-oxygen gas. For example, if the opening degree of the speed control valve on the low-oxygen gas output apparatus is larger, the nitrogen concentration of the second target gas or the third target gas is lower, the nitrogen concentration is higher, etc.

As an optional embodiment, an oxygen concentration sensor is disposed on the low-oxygen gas output apparatus; and the oxygen concentration sensor is configured to detect an oxygen concentration of the received third target gas. The oxygen concentration sensor may be configured to monitor the oxygen concentration of the third target gas received by a low-oxygen output apparatus, such that the speed control valve on the low-oxygen output apparatus is opened to output the third target gas when ensuring that the oxygen concentration of the residual gas is low enough.

As an optional embodiment, a one-way valve configured to control an air flow direction is disposed on the low-oxygen gas output apparatus. The one-way valve only allows the second target gas to flow to the low-oxygen gas output apparatus from the gas separation apparatus or the residual gas return channel, and does not allow the air outside the gas supply assembly to flow to the gas separation apparatus or the residual gas return channel from the low-oxygen gas output apparatus, so as to ensure that after the treated gases are divided into the first target gas and the second target gas by using the gas separation apparatus, the oxygen concentrations of the first target gas and second target gas are not affected due to the entering of the external air, thus reducing the gas supply effect.

As an optional embodiment, a speed control valve configured to regulate an air inflow rate and/or a one-way valve configured to control an air flow direction are disposed on the air receiving apparatus. By changing the opening degree of the speed control valve on the air receiving apparatus, the speed of the air flowing into the gas supply assembly may be controlled, and at the same time, the oxygen concentration of the third target gas may also be controlled. For example, if the flow speed of the air is slower, the oxygen concentration of the third target gas outputted by the low-oxygen gas output apparatus is lower. The one-way valve only allows the air outside the gas supply assembly to enter the gas supply assembly as the raw material gas, and does not allow the second target gas returning from the residual gas return channel to the air pre-processing apparatus to flow to the outside of the gas separation apparatus from the air receiving apparatus, thereby ensuring that the second target gas can be smoothly combined with the air received from the air receiving apparatus for cyclic processing, so as to obtain the third target gas of which oxygen concentration is low enough.

As an optional embodiment, the residual gas return channel is provided with a switch valve; and the switch valve is configured to open the residual gas return channel. By providing the switch valve on the residual gas return channel, a state of the residual gas return channel may be controlled. When the low-oxygen gas is required to be prepared by using the gas supply assembly, the switch valve on the residual gas return channel may be opened to allow the second target gas to return to the air pre-processing apparatus, to increase the nitrogen concentration of the gas in the gas supply assembly, so as to obtain the third target gas with a lower oxygen concentration at the low-oxygen gas output apparatus. When the switch valve on the residual gas return channel is in a close state, the second target gas no longer returns to the air pre-processing apparatus, such that the nitrogen concentration of the gas in the gas supply assembly is lower than the nitrogen concentration of the gas when the switch valve is in an open state, that is, in this case, the gas supply assembly may prepare the first target gas more efficiently.

It is to be noted that, the above speed control valves may be replaced with electric speed control valves, and by adding a concentration detection sensor and a flow sensor at oxygen-enriched gas and low-oxygen gas outlets, concentrations and flows of an oxygen port and nitrogen port may be automatically adjusted in real time.

The embodiments of the present invention further provide a method for preparing a gas. Fig. 6 is a flowchart of a method I for preparing a gas according to embodiments of the present invention. As shown in Fig. 6, the method includes the following steps.

At S202, an external air is received by using an air receiving apparatus, and the received air is conducted into an air pre-processing apparatus.

At S604, the air pre-processing apparatus is used to process the air received by the air receiving apparatus, so as to obtain processed air, and the processed air is conducted into the gas separation apparatus.

At S606, the gas separation apparatus is used to perform high-pressure adsorption on nitrogen in the processed air, partial first target gas remained after high-pressure adsorption is discharged from a second gas outlet, and the high-pressure adsorbed nitrogen is released after discharging the partial first target gas, so as to obtain a second target gas.

At S608, the second target gas is returned to the air pre-processing apparatus by using a residual gas return channel, and cyclic processing is performed in combination with the air received by the air receiving apparatus.

At S610, an oxygen concentration in the second target gas after cyclic processing is detected by using an oxygen concentration sensor on a low-oxygen gas output apparatus of the residual gas return channel.

At S612, when the oxygen concentration sensor detects that a current oxygen concentration reaches a target oxygen concentration, a speed control valve on the low-oxygen gas output apparatus is opened to output a third target gas.

Through the above steps, after the external air is received by the air receiving apparatus and the air is treated by the air pre-processing apparatus, the nitrogen in the processed air is adsorbed by using the gas separation apparatus. The processed air is divided into the first target gas with a high oxygen concentration and the second target gas with a low oxygen concentration. The second target gas returns to the air pre-processing apparatus through the residual gas return channel and is subjected to cyclic processing processes of air treatment, high-pressure nitrogen adsorption, etc. again together with the air received from the outside of the gas separation apparatus. During the processes, the gas separation apparatus continuously performs nitrogen adsorption on the gas flowing into the gas separation apparatus, that is, after the cyclic processing is performed for a plurality of times, the second target gas with a lower oxygen concentration may be obtained. The second target gas circulates to the low-oxygen gas output apparatus. When the second target gas received by the low-oxygen gas output apparatus is the third target gas, the third target gas may be outputted by opening the speed control valve.

As an optional embodiment, the method further includes: a speed control valve on the air receiving apparatus and an opening degree of the speed control valve on the low-oxygen gas output apparatus are adjusted according to the current oxygen concentration detected by the oxygen concentration sensor on the low-oxygen gas output apparatus and the target oxygen concentration. For example, if the opening degree of the speed control valve on the low-oxygen gas output apparatus is larger, the nitrogen concentration of the third target gas is lower, and the flow rate is faster; and when the opening degree of the speed control valve on the low-oxygen gas output apparatus is unchanged, if the opening degree of the speed control valve on the air receiving apparatus is smaller, the nitrogen concentration of the third target gas is higher, the flow rate is slower, etc.

As an optional embodiment, the method further includes: when the second gas outlet of the gas separation apparatus connects with a first target gas output module and a speed control valve is disposed on the first target gas output module, an opening degree of the speed control valve on the first target gas output module is adjusted according to the current concentration detected by the oxygen concentration sensor on the low-oxygen gas output apparatus and the target oxygen concentration. For example, if the opening degree of the speed control valve on the first target gas output module is larger, the flow rate of the third target gas is faster, the nitrogen concentration of the third target gas is lower, etc.

As an optional embodiment, the third target gas is applied to post-processing of 3D printing as a curing protection gas. The low-oxygen gas may be used in the field requiring low oxygen (antioxidant), such as industrial packaging, food packaging, curing treatment after 3D printing, etc. The low-oxygen gas used for the curing treatment after 3D printing is used as a curing protection atmosphere, which may prevent a resin on a surface of a printed member to be cured from generating an oxygen inhibition effect, thereby improving a curing effect and quality.

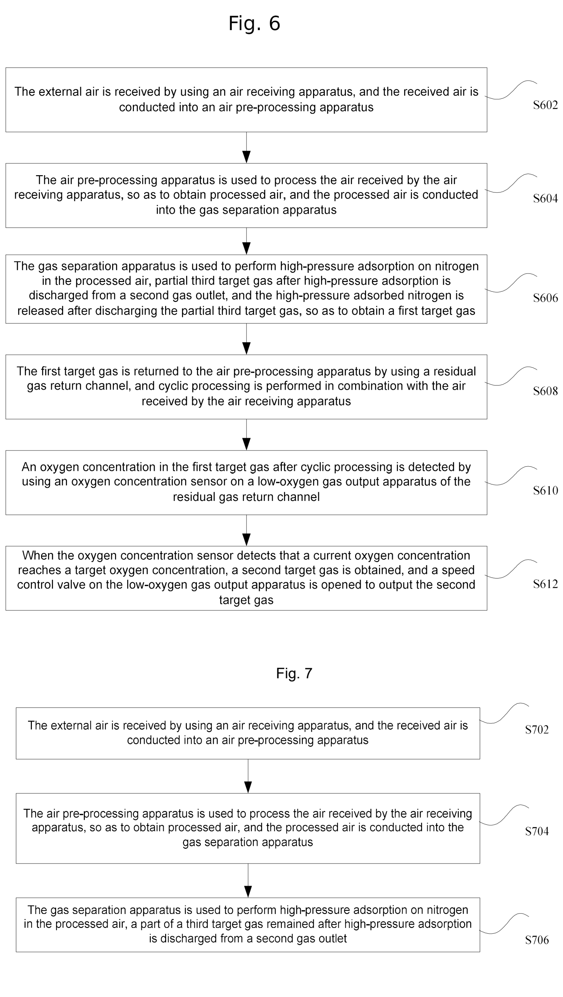

The embodiments of the present invention further provide a method for preparing a gas. Fig. 7 is a flowchart of a method II for preparing a gas according to embodiments of the present invention. As shown in Fig. 7, the method includes the following steps.

At S702, the external air is received by using an air receiving apparatus, and the received air is conducted into an air pre-processing apparatus.

At S704, the air pre-processing apparatus is used to process the air received by the air receiving apparatus, so as to obtain processed air, and the processed air is conducted into the gas separation apparatus.

At S706, the gas separation apparatus is used to perform high-pressure adsorption on nitrogen in the processed air, and partial first target gas remained after high-pressure adsorption is discharged from a second gas outlet.

Through the above step, the air receiving apparatus is used to receive the external air, and after the air is treated by using the air pre-processing apparatus, the nitrogen in the processed air is adsorbed by using the gas separation apparatus, such that the first target gas with a higher oxygen concentration may be obtained at the second gas outlet.

As an optional embodiment, when the second gas outlet of the gas separation apparatus connects with a first target gas output module, and a speed control valve is disposed on the first target gas output module, the method further includes: the speed control valve on the first target gas output module is opened to output the first target gas when an oxygen concentration sensor on the first target gas output module detects that a current oxygen concentration reaches a target oxygen concentration. In this embodiment, by connecting the first target gas output module at the second gas outlet, the oxygen concentration of the first target gas and the flow rate of the first target gas may be better controlled.

As an optional embodiment, the method further includes: a speed control valve on the air receiving apparatus and an opening degree of the speed control valve on the first target gas output module are adjusted according to the current oxygen concentration detected by the oxygen concentration sensor on the first target gas output module and the target oxygen concentration. For example, if the opening degree of the speed control valve on the first target gas output module is larger, the flow rate of the first target gas is faster, the oxygen concentration is lower, etc.

As an optional embodiment, when a pressure difference unit is disposed on the first target gas output module, the method further includes: an air pressure of the first target gas is detected based on the pressure difference unit, and the pressure difference unit is used to control the speed control valve on the first target gas output module and an opening degree of the speed control valve on the air receiving apparatus based on the air pressure of the first target gas. Through the pressure difference unit on the first target gas output module, the air pressure when the first target gas is outputted may be monitored, and the pressure difference unit may also automatically control the opening device of the speed control valve by acquiring the preset air pressure value and in combination with the monitored output air pressure of the first target gas, so as to achieve the desired output air pressure of the first target gas.

As an optional embodiment, the first target gas is configured to supply oxygen to a printing process for 3D printing. The first target gas is applied to any field requiring the oxygen, such as the medical field and the household field. When being applied to a 3D printing scenario, the oxygen-enriched gas may assist in reducing a peeling force between a cured resin and a bottom of a material tray during printing, so as to accelerate a printing speed. For example, by applying the oxygen-enriched gas to a 3D printer, so as to provide oxygen to the material tray, in a light curing process, oxygen inhibition is formed between the bottom of the material tray and a formed printed member, so as to reduce an adhesion force and reduce a separating force, thereby improving printing efficiency.

The embodiments of the present invention further provide a method for preparing a gas. Fig. 8 is a flowchart of a method III for preparing a gas according to embodiments of the present invention. As shown in Fig. 8, the method includes the following steps.

At S802, the external air is received by using an air receiving apparatus, and the received air is conducted into an air pre-processing apparatus.

At S804, the air pre-processing apparatus is used to process the air received by the air receiving apparatus, so as to obtain processed air, and the processed air is conducted into the gas separation apparatus.

At S806, the gas separation apparatus is used to perform high-pressure adsorption on nitrogen in the processed air, partial first target gas remained after high-pressure adsorption is discharged from a second gas outlet, and the high-pressure adsorbed nitrogen is released after discharging the partial first target gas, so as to obtain a second target gas.

At S808, the second target gas is returned to the air pre-processing apparatus by using a residual gas return channel, and cyclic processing is performed in combination with the air received by the air receiving apparatus.

At S810, an oxygen concentration in the second target gas after cyclic processing is detected by using an oxygen concentration sensor on a low-oxygen gas output apparatus of the residual gas return channel.

At S812, when the oxygen concentration sensor on the low-oxygen gas output apparatus detects that a current oxygen concentration is a low-oxygen gas target oxygen concentration, a speed control valve on the low-oxygen gas output apparatus is opened to output a third target gas.

Through the above steps, after the external air is received by the air receiving apparatus and the air is treated by the air pre-processing apparatus, the nitrogen in the processed air is adsorbed by using the gas separation apparatus. The processed air is divided into the first target gas with a high oxygen concentration and the second target gas with a low oxygen concentration. The first target gas is discharged from the second gas outlet. The second target gas returns to the air pre-processing apparatus through the residual gas return channel and is subjected to cyclic processing processes of air treatment, high-pressure nitrogen adsorption, etc. again together with the air received from the outside of the gas separation apparatus. During the processes, the gas separation apparatus in the gas supply assembly continuously performs nitrogen adsorption on the gas flowing into the gas separation apparatus, that is, after the cyclic processing is performed for a plurality of times, the first target gas with a higher oxygen concentration and the second target gas with a lower oxygen concentration may be obtained. The second target gas circulates to the low-oxygen gas output apparatus. When the second target gas received by the low-oxygen gas output apparatus is the third target gas, the third target gas may be outputted by opening the speed control valve.

As an optional embodiment, when the second gas outlet of the gas separation apparatus connects with a first target gas output module, and a speed control valve is disposed on the first target gas output module, the method further includes: the speed control valve on the first target gas output module is opened to output the first target gas when an oxygen concentration sensor on the first target gas output module detects that a current oxygen concentration is an oxygen-enriched gas target oxygen concentration. In this embodiment, by connecting the first target gas output module at the second gas outlet, the oxygen concentration of the first target gas and the flow rate of the first target gas may be better controlled.

As an optional embodiment, the method further includes: an opening degree of the speed control valve on the low-oxygen gas output apparatus is adjusted according to the current oxygen concentration detected by the oxygen concentration sensor on the low-oxygen gas output apparatus and the low-oxygen gas target oxygen concentration. For example, if the opening degree of the speed control valve on the low-oxygen gas output apparatus is larger, the nitrogen concentration of the third target gas is lower, the flow rate is faster, etc.

As an optional embodiment, the method further includes: an opening degree of the speed control valve on the first target gas output module is adjusted according to the current oxygen concentration detected by the oxygen concentration sensor on the first target gas output module and the oxygen-enriched gas target oxygen concentration. For example, if the opening degree of the speed control valve on the first target gas output module is larger, the oxygen concentration of the first target gas is lower, the nitrogen concentration of the third target gas is higher, etc.

As an optional embodiment, when a pressure difference unit is disposed on the first target gas output module, the method further includes: an air pressure of the first target gas is detected based on the pressure difference unit, and the pressure difference unit is used to control an opening degree of the speed control valve on the first target gas output module based on the air pressure of the first target gas. Through the pressure difference unit on the first target gas output module, the air pressure when the first target gas is outputted may be monitored, and the pressure difference unit may also automatically control the opening device of the speed control valve by acquiring the preset air pressure value and in combination with the monitored output air pressure of the first target gas, so as to achieve the desired output air pressure of the first target gas.

As an optional embodiment, the third target gas is applied to post-processing of 3D printing as a curing protection gas, and the first target gas is configured to supply oxygen to a printing process for 3D printing. By means of the method in this embodiment, the oxygen-enriched gas and the low-oxygen gas may be prepared at the same time. The oxygen-enriched gas may be applied to the 3D printing process (a front end) of a 3D printing system, and the low-oxygen gas may be applied to post-processing (post-curing process) of the 3D printing system, so as to achieve a closed loop of the 3D printing system, thereby improving efficiency.

Based on the above embodiments and optional embodiments, the present invention provides an optional implementation, which is described below.

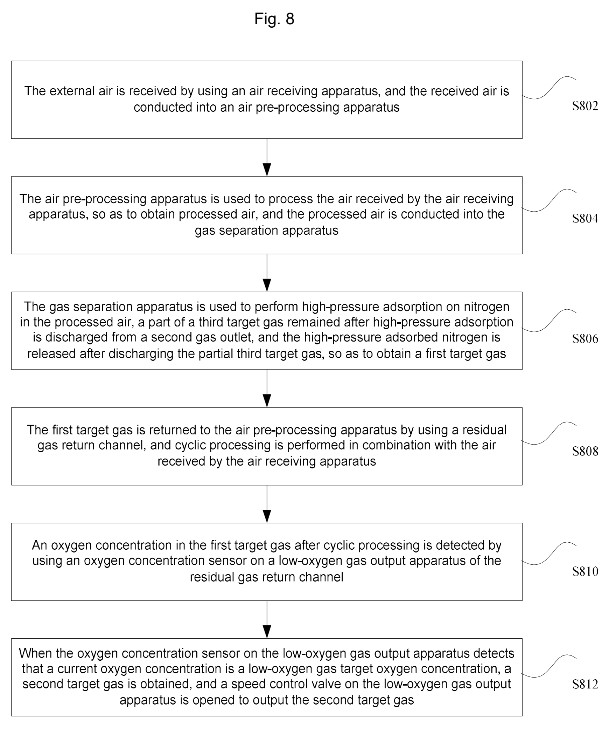

Fig. 9 is a schematic diagram of a gas supply assembly according to optional implementations of the present invention. As shown in Fig. 9, the gas supply assembly is mainly provided in two channels, including a low-oxygen gas preparation channel, an oxygen-enriched gas preparation channel, and a nitrogen circulation channel. Components mainly involved include a 1# speed control valve, a 1# one-way valve, a filter, an air compressor, a separation valve, a molecular sieve tower, a 2# speed control valve, a 2# one-way valve, a 3# speed control valve, a 3# one-way valve, a switch valve, oxygen concentration and flow sensors, and nitrogen concentration and flow sensors. Channel connections and specific functions of the components are introduced below.

### (1) Oxygen-enriched gas preparation channel

**The** oxygen-enriched gas preparation channel passes through the 1# speed control valve, the 1# one-way valve, the filter, an air compressor, a cooling system, the separation valve, the molecular sieve tower, a flow-limiting ring, the 2# one-way valve, the 2# speed control valve, and the oxygen concentration and flow sensors.

### 1) 1# speed control valve

Air enters from Port 1 of the 1# speed control valve and flows out from the Port 2; the 1# speed control valve is configured to limit a entering speed of the air; and if an adjusted flow is smaller, a flow of an outputted oxygen-enriched gas is smaller, and an oxygen concentration is higher.

### 2) 1# one-way valve

After passing through the 1# speed control valve, the air flows through the Port 2 via the Port 1 of the 1# one-way valve; and the 1# one-way valve is configured to provide a channel that allows the air to enter but not flow out, and simultaneously limit nitrogen of the nitrogen circulation channel from being discharged via an air inlet.

### 3) Filter

After passing through the 1# one-way valve, the air and the low-concentration nitrogen of the nitrogen circulation channel flow into the filter; and the filter is configured to filter dust and water vapor in the air, such that the service life of the molecular sieve tower may be effectively prolonged.

### 4) Air compressor

**The** clean and dry gas passes through the filter, then is pressurized and accelerated by Port 1 of the air compressor, and flows through Port 2; and the air compressor is configured to increase a gas pressure and accelerate the flow rate of the air.

### 5) Cooling system

The air flows through Port 2 from Port 1 of the cooling system after being pressurized and accelerated. A temperature rises due to the pressurized air, and the cooling system is configured to reduce a temperature of the air, so as to ensure that the temperatures of the outputted nitrogen and oxygen-enriched gas cannot be too high.

### 6) Separation valve

The cooled air enters the separation valve after passing through the cooling system, and the separation valve is a two-position four-way valve. The first switching of switching logic of a valve body channel is that the Port 1 is connected to the Port 2, and at the same time, the Port 3 is connected to the Port 4; and the second switching is that the Port 1 is connected to the Port 3, and at the same time, the Port 2 is connected to the Port 4 (cross connection). A function of the separation valve is to cyclically switch a gas circuit in turn, and allow the pressurized air to cyclically enter the molecular sieve tower and discharge the gas inside the molecular sieve tower at the same time. The pressurized air passes through the separation valve, and then respectively enters Port 1 and Port 2 of the molecular sieve tower, and is outputted from Port 3 and Port 4. Through the switching of the separation valve, adsorbed nitrogen is discharged from the Port 1 and Port 2 of the molecular tower.

### 7) Molecular sieve tower

The molecular sieve tower is configured to adsorb the nitrogen in the air during pressurization, and the remaining unabsorbed oxygen-enriched gas is collected and becomes the high-purity oxygen-enriched gas after being purified. When the molecular sieve tower is depressurized, the adsorbed nitrogen flows through Port 2 and Port 3 of the separation valve from the Port 1 and Port 2 of the molecular tower, converged to Port 4, and is discharged to return to ambient air. The nitrogen may be adsorbed again during next pressurization, and the oxygen-enriched gas is prepared, and the entire process is a periodically dynamic cyclic process.

There are a plurality of adsorption molecular sieves in the molecular sieve. A pressure equalizing process is added in an adsorption process, such that a recovery rate of the oxygen-enriched gas may be further increased, thereby reducing energy consumption. By using a left-side adsorption molecular sieve tower process as an example, the cycle operation timing is as follows.
1. Pressurization/adsorption: a raw material gas enters a left-side adsorption molecular sieve tower for pressurization, and the molecular sieve adsorbs the nitrogen to produce the oxygen-enriched gas.
2. Pressure equalizing: due to the action of the flow-limiting ring, outputs of left and right molecular towers 3 and 4 are connected, and the left-side molecular sieve tower performs pressure equalizing on the right-side molecular sieve tower, causing a gas discharged through the depressurization of the left-side molecular sieve tower to be effectively used.
3. Emptying: the left-side molecular sieve tower is depressurized and desorbed, the adsorbed nitrogen is discharged, and the molecular sieve is regenerated, such that the recycling of the molecular sieve is realized.
4. Washing: the left-side molecular sieve tower is washed by using a portion of product gas separated by the right-side molecular sieve tower, so as to remove residual nitrogen in an adsorbent, thereby improving the reproductive capability of the molecular sieve, and improving the adsorption performance on the nitrogen.
5. Pressure equalizing: due to the action of the flow-limiting ring, the outputs of the left and right molecular towers 3 and 4 are connected, and the right-side molecular sieve tower performs pressure equalizing on the left-side molecular sieve tower, causing a gas discharged through the depressurization of the right-side molecular sieve tower to be effectively used.

### 8) Flow-limiting ring

The oxygen-enriched gas enters the flow-limiting ring after being outputted from the Port 3 and Port 4 of the molecular sieve. The flow-limiting ring is configured to increase a pressure inside the molecular tower, so as to increase an oxygen concentration of the outputted oxygen-enriched gas.

### 9) 2# one-way valve

The oxygen-enriched gas flows to Port 2 from Port 1 of the 2# one-way valve after passing through the flow-limiting ring. The one-way valve is configured to further increase the pressure inside the molecular tower, so as to increase the oxygen concentration of the outputted oxygen-enriched gas and prevent backflow of the oxygen-enriched gas from being discharged at the same time.

### 10) 2# speed control valve

The oxygen-enriched gas passes through the 2# one-way valve, and then flows to Port 2 from Port 1 of the 2# speed control valve. The valve is configured to limit an output flow of the oxygen-enriched gas. By adjusting the speed control valve, an output concentration of the oxygen-enriched gas may be adjusted, and an output concentration of the nitrogen may also be adjusted.

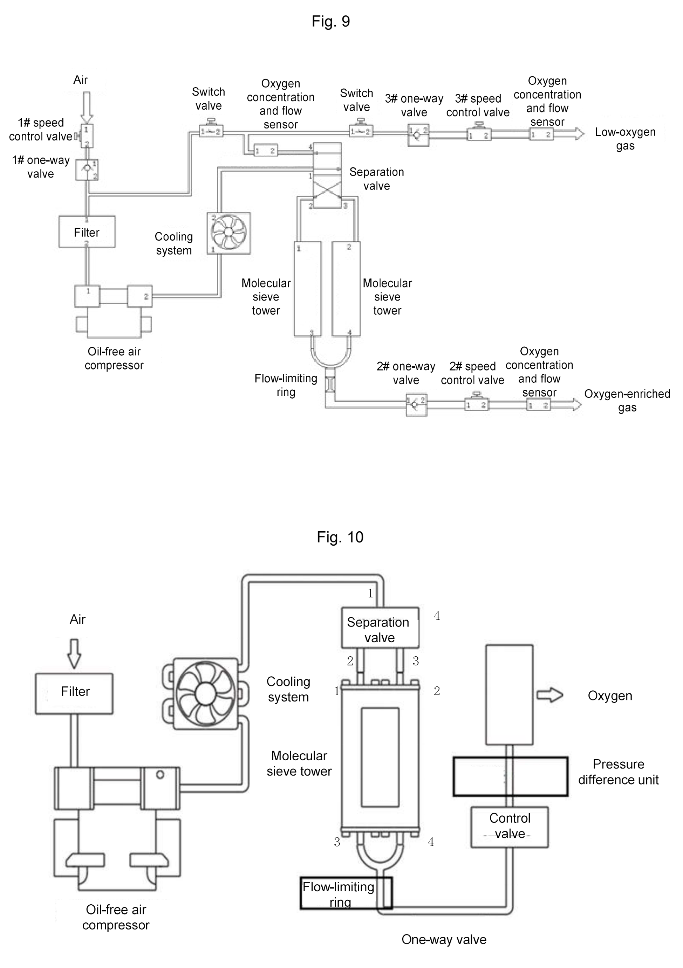

A pressure difference unit may also be disposed in the oxygen-enriched gas preparation channel. Fig. 10 is a schematic diagram of an assembly for preparing an oxygen-enriched gas according to optional implementations of the present invention. As shown in Fig. 10, the assembly includes a filter, a compressor, a separation valve, a molecular sieve tower, a flow-limiting ring, a speed control valve, and a pressure difference unit. A process of preparing an oxygen-enriched gas based on the assembly for preparing the oxygen-enriched gas is introduced below.

The air flows into the filter. The filter is configured to filter dust and water vapor in the air. The dust and water vapor have a significant effect on the efficiency of preparing the oxygen-enriched gas in the molecular sieve, and the filter may effectively prolong the service life of the molecular sieve tower. The clean and dry gas is pressurized and accelerated by the air compressor after passing through the filter, and the air compressor is configured to increase a gas pressure and accelerate the flow rate of the air. The air enters a cooling system after being pressurized and accelerated. A temperature rises due to the pressurized air, and the cooling system is configured to reduce a temperature of the air, so as to ensure that a temperature of the outputted oxygen-enriched gas cannot be too high. The cooled air enters the separation valve after passing through the cooling system, and the separation valve is a two-position four-way valve. Port 1 is a gas inlet, Port 2 and Port 3 are ports connected to the molecular tower, and Port 4 is an exhaust port. The first switching of switching logic of a valve body channel is that the Port 1 is connected to the Port 2, and at the same time, the Port 3 is connected to the Port 4; and the second switching is that the Port 1 is connected to the Port 3, and at the same time, the Port 2 is connected to the Port 4. A function of the separation valve is to cyclically switch a gas circuit in turn, and allow the pressurized air to cyclically enter the molecular sieve tower and discharge the gas inside the molecular sieve tower at the same time. The pressurized air passes through the separation valve, and then enters two inner cavities of the molecular tower, respectively. Through the switching of the separation valve, adsorbed nitrogen is discharged from a gas inlet of the molecular tower. The molecular sieve tower is configured to adsorb the nitrogen in the air during pressurization, and the remaining unabsorbed oxygen-enriched gas is collected and becomes the high-purity oxygen-enriched gas after being purified. The adsorbed nitrogen is discharged from the molecular sieve to ambient air through the separation valve when the molecular sieve is depressurized. The nitrogen may be adsorbed again during next pressurization, and the oxygen-enriched gas is prepared, and the entire process is a periodically dynamic cyclic process. The oxygen-enriched gas enters the flow-limiting ring after being outputted from the molecular sieve. The flow-limiting ring is configured to increase a pressure inside the molecular sieve, so as to increase a concentration of the outputted oxygen-enriched gas. The oxygen-enriched gas enters a one-way valve after passing through the flow-limiting ring. The one-way valve is configured to further increase the pressure inside the molecular tower, so as to increase the concentration of the outputted oxygen-enriched gas and prevent backflow of the oxygen-enriched gas from being discharged at the same time. Fig. 11 is a schematic diagram of air pressure feedback control according to optional implementations of the present invention. As shown in Fig. 11, the oxygen-enriched gas flows through an electric speed control valve and the pressure difference unit. The pressure difference unit detects an air pressure outputted by the oxygen-enriched gas, and feeds back same to the electric speed control valve to adjust a flow rate in real time, so as to change the outputted air pressure. The electric speed control valve is configured to adjust a flow rate of a pipeline. The pressure difference unit monitors an air pressure of the gas circuit in real time, so as to realize closed loop feedback and adjustment of the air pressure.

The oxygen-enriched gas is prepared based on the assembly for preparing the oxygen-enriched gas, requirements for a high oxygen concentration during light-curing 3D printing may be met, and the oxygen concentration and flow rate may be controlled, a gas concentration and flow rate are accurately controlled, oxygen concentration control accuracy reaches 1%, and the accuracy of controlling the gas flow rate reaches 0.01 L/min. Furthermore, the assembly for preparing the oxygen-enriched gas can feed back a concentration of a gas, and perform control and adjustment according to the gas concentration, flow rate, and air pressure fed back, such that the oxygen concentration is allocated according to requirements of 3D printing, thereby realizing closed-loop control. Meanwhile, a special drying module is disposed on a gas input end of the assembly for preparing the oxygen-enriched gas, so as to dry the inputted air. After the air compressor compresses the air, the drying modules may be increased or reduced according to the service life, so as to ensure that the moisture content of the air inputted to the molecular sieve is extremely low, thereby ensuring that the service life meets requirements.

Therefore, by using the assembly for preparing the oxygen-enriched gas, during light-curing 3D printing, for the requirements for the oxygen concentration, flow rate and air pressure of the oxygen-enriched gas, the assembly for preparing the oxygen-enriched gas can not only reduce the adhesion force, but also not affect printing accuracy, can accurately adjusted the oxygen concentration, flow rate and air pressure of the oxygen-enriched gas, can be adapted to the use of various material trays and platforms without affecting the accuracy or other effects, and meet the requirements for the service life at the same time.

### (2) Low-oxygen gas preparation channel

The low-oxygen gas preparation channel passes through the 1# speed control valve, the 1# one-way valve, the filter, the air compressor, the cooling system, the separation valve, the molecular sieve tower, the separation valve, the 3# one-way valve, the 3# speed control valve, and the nitrogen concentration and flow sensors.

On the basis of the oxygen-enriched gas preparation channel, the Port 4 of the separation valve is connected, the Port 4 of the separation valve discharges the nitrogen adsorbed in the molecular tower, one portion of the nitrogen is returned to the filter through the nitrogen circulation channel, one portion of the nitrogen flows to the 3# one-way valve and then flows to Port 2 from Port 1 of the 3# one-way valve. The 3# one-way valve is configured to prevent backflow of the low-oxygen gas and prevent the air from entering from the low-oxygen gas outlet. The low-oxygen gas passes through the 3# one-way valve, then flows through Port 2 from Port 1 of the 3# speed control valve, and is finally outputted. The 3# speed control valve is configured to control an output flow of the low-oxygen gas and adjust the output concentration of the oxygen-enriched gas at the same time.

### (3) Nitrogen circulation channel

The nitrogen circulation channel passes through the molecular sieve tower, the separation valve, the switch valve, the filter, the air compressor, the cooling system, and the molecular sieve tower.

The nitrogen circulation channel is configured to allow the nitrogen outputted by the separation valve to return to the oxygen-enriched gas preparation channel again, so as to further increase a nitrogen concentration of the low-oxygen gas output channel. The 1# one-way valve is configured to limit the discharging of the returned nitrogen, such that the nitrogen is not discharged from an air inlet channel. The 3# one-way valve is configured to increase an air pressure inside the nitrogen circulation channel, so as to ensure that one portion of the nitrogen enters the oxygen-enriched gas preparation channel again, and one portion of the nitrogen is outputted to the low-oxygen gas outlet.

Preparation of the oxygen-enriched gas and preparation of the low-oxygen gas based on the gas supply assembly, as well as the method for preparing the oxygen-enriched gas and the low-oxygen gas at the same time, are introduced below.

### (1) Preparation of oxygen-enriched gas

The machine is started, the 1# speed control valve and the 3# speed control valve are completely opened, the switch valve of the nitrogen circulation channel is closed, and by adjusting the 2# speed control valve and monitoring the oxygen concentration and flow sensors, the oxygen-enriched gases with different flows and concentrations may be obtained.

### (2) Preparation of low-oxygen gas

The machine is started, the switch valve of the nitrogen circulation channel is opened, the flow of the 3# speed control valve is unchanged, and if the flows of the 1# speed control valve and the 2# speed control valve are smaller, the nitrogen concentration of the low-oxygen gas is lower, and the flow is larger; if the flows of the 1# speed control valve and the 2# speed control valve are larger, the nitrogen concentration of the low-oxygen gas is lower, and the flow is larger; and if the flows of the 1# speed control valve and the 2# speed control valve are unchanged, the flow of the 3# speed control valve is smaller, and the nitrogen concentration of the low-oxygen gas is higher.

### (3) Simultaneous preparation of oxygen-enriched gas and low-oxygen gas

The machine is started, the switch valve of the nitrogen circulation channel is opened, and the 1# speed control valve is completely opened; if the flow of the 2# speed control valve is larger, the oxygen concentration of the oxygen-enriched gas is lower, and the nitrogen concentration of the low-oxygen gas is higher; if the flow of the 2# speed control valve is smaller, the oxygen concentration of the oxygen-enriched gas is higher, and the nitrogen concentration of the low-oxygen gas is lower; if the flow of the 3# speed control valve is larger, the nitrogen concentration of the low-oxygen gas is lower, and the oxygen concentration of the oxygen-enriched gas is higher; and if the flow of the 3# speed control valve is smaller, the nitrogen concentration of the low-oxygen gas is higher, and the oxygen concentration of the oxygen-enriched gas is lower.

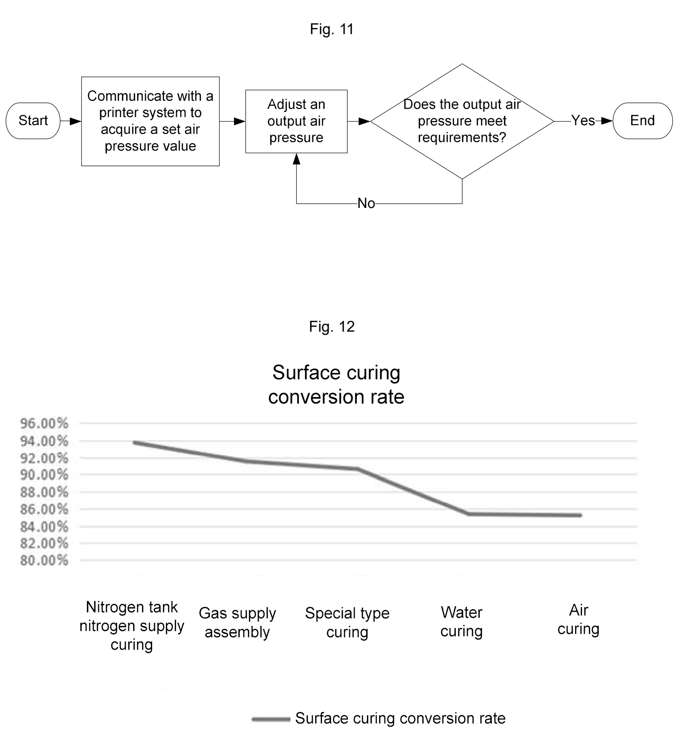

To sum up, according to the optional implementations of the present invention, by adding gas circuits for connecting the exhaust ports of the separation valves, and adding devices such as the one-way valves and speed control valves, the air is circulated twice and passes through the molecular tower, such that the low-oxygen gas with high-concentration nitrogen is obtained. Furthermore, the gas supply assembly provided in the optional implementations of the present invention can output the low-oxygen gas with high-concentration nitrogen while outputting the oxygen-enriched gas with high-concentration oxygen, thus is suitable for three application scenarios of preparing the oxygen-enriched gas, preparing the low-oxygen gas, and simultaneously preparing the oxygen-enriched gas and the low-oxygen gas, and may adjust the concentrations and flows of the oxygen and nitrogen of the output gas. Furthermore, the gas supply assembly provided in the optional implementations of the present invention has no consumables within the service life, such that component replacement is not required, and gas supply stability is high. Fig. 12 is a schematic comparison diagram of curing efficiency of 3D printing curing treatment using a gas supply assembly and conventional curing method according to optional implementations of the present invention. It may be seen that, the curing efficiency of the nitrogen tank supplying the nitrogen is up to nearly 94%. Secondly, for the curing of the low-oxygen gas provided by the gas supply assembly provided in the optional implementations of the present invention, the curing efficiency is second only to the curing efficiency of the nitrogen tank supplying the nitrogen, the curing efficiency is nearly 92%, and the curing efficiency of special reagents, water, air, etc. is relatively low. The gas supply assembly provided in the optional implementations of the present invention for the curing of the low-oxygen gas is a safe, convenient, low-cost, and highly efficient curing method relative to other curing methods.

The serial numbers of the foregoing embodiments of the present invention are merely for description, and do not represent the superiority or inferiority of the embodiments.

In the above embodiments of the present invention, the description of the embodiments has its own focus. For parts that are not described in detail in a certain embodiment, reference may be made to related descriptions of other embodiments.

In the several embodiments provided in the present invention, it should be understood that, the disclosed technical content can be implemented in other ways. The apparatus embodiments described above are merely illustrative. For example, the division of units may be a logical function division, and there may be other divisions in actual implementation. For example, a plurality of units or components may be combined or integrated into another system, or some features can be ignored, or not implemented. In addition, the displayed or discussed mutual coupling or direct coupling or communication connection may be indirect coupling or communication connection through some interfaces, units or modules, and may be in electrical or other forms.

The units described as separate components may or may not be physically separated. The components displayed as units may or may not be physical units, that is, the components may be located in one place, or may be distributed on the plurality of units. Part or all of the units may be selected according to actual requirements to achieve the purposes of the solutions of this embodiment.

In addition, the functional units in the various embodiments of the present invention may be integrated into one processing unit, or each unit may exist alone physically, or two or more than two units may be integrated into one unit. The above integrated unit can be implemented in the form of hardware, or can be implemented in the form of a software functional unit.

If the integrated unit is implemented in the form of the software functional unit and sold or used as an independent product, it can be stored in the computer readable storage medium. Based on this understanding, the technical solutions of the present invention essentially or the parts that contribute to the related art, all or part of the technical solutions can be embodied in the form of a software product. The computer software product is stored in a storage medium, including a plurality of instructions for causing a computer device (which may be a personal computer, a server, or a network device, and the like) to execute all or part of the steps of the method described in the various embodiments of present invention. The foregoing storage medium includes a USB flash disk, a Read-Only Memory (ROM), a Random Access Memory (RAM), and various media that can store program codes, such as a mobile hard disk, a magnetic disk, or an optical disk.

The above description is merely preferred implementations of the present invention, and it should be noted that those of ordinary skill in the art may also make several improvements and refinements without departing from the principle of the present invention, and it should not be considered that these improvements and refinements shall fall within the protection scope of the present invention.

## Claims

1. A 3D printing system, comprising a 3D printer, a controller, and a gas separation apparatus, **characterized in that**
the controller communicates with the 3D printer, and is configured to control the 3D printer to perform 3D printing;
the controller also communicates with the gas separation apparatus, and is configured to generate a control instruction according to a preset control policy and send same to the gas separation apparatus; and
the gas separation apparatus is configured to, based on the received control instruction, separate air received from outside of the gas separation apparatus to obtain a first target gas, so as to transport same to the 3D printer.

2. The system as claimed in claim 1, **characterized in that** the control policy is configured to:
in response to a start operation triggered by a user or timed start operation, generate and send a first control instruction to the gas separation apparatus, wherein the first control instruction comprises starting an operation of transportation of the first target gas; and
in response to a closing operation triggered by the user or timed closing operation, generate and send a second control instruction to the gas separation apparatus, wherein the second control instruction comprises stopping an operation of the transportation of the first target gas.

3. The system as claimed in claim 1, **characterized in that** the control policy is configured to:
generate and send a first control instruction to the gas separation apparatus when detecting that the 3D printer being in an operation state, wherein the first control instruction comprises starting an operation of transportation of the first target gas; and
generate and send a second control instruction to the gas separation apparatus when detecting that the 3D printer being not in the operation state, wherein the second control instruction comprises stopping an operation of the transportation of the first target gas.

4. The system as claimed in claim 3, **characterized in that** the control policy is configured to:
determine that the 3D printer is in the operation state when detecting one or more of: the 3D printer is powered on, a light source of the 3D printer starts to transmit light, a forming platform of the 3D printer moves for a nth time, a printing task start instruction is received, or a printing material of the 3D printer reaches a preset position;
determine that the 3D printer is not in the operation state when detecting one or more of: the 3D printer is powered off, the light source of the 3D printer stops to transmit light, the forming platform of the 3D printer moves for an mth time, a printing task stop instruction is received, or
the printing material of the 3D printer is lower than the preset position, wherein m and n are integers, and m is greater than n.

5. The system as claimed in claim 1, **characterized in that** the control policy is configured to:
generate and send a third control instruction when detecting one or more of: a release film of the 3D printer is higher than a preset calibration position, an air pressure of the first target gas in the 3D printer is higher than a preset air pressure range, airflow of the first target gas in the 3D printer is higher than a preset range, a concentration of the first target gas in the 3D printer is higher than a preset concentration range, or a lower surface bearing force of the release film of the 3D printer is greater than an upper surface bearing force, wherein the third control instruction comprises controlling to reduce a gas transported by the gas separation apparatus;
generate and send a fourth control instruction when detecting one or more of: the release film of the 3D printer is lower than the preset calibration position, the air pressure of the first target gas in the 3D printer is lower than the preset air pressure range, the airflow of the first target gas in the 3D printer is lower than the preset range, the concentration of the first target gas in the 3D printer is lower than the preset concentration range, or the upper surface bearing force of the release film of the 3D printer is less than the lower surface bearing force, wherein the fourth control instruction comprises controlling to increase the gas transported by the gas separation apparatus.

6. The system as claimed in claim 1, **characterized in that** the gas separation apparatus is disposed in the 3D printer or is disposed separately and independently from the 3D printer.

7. The system as claimed in claim 2 or 3, **characterized in that** the gas separation apparatus comprises an air receiving apparatus, a gas separation module, and a first target gas output module, wherein
the air receiving apparatus is configured to receive and respond to the control instruction from the controller, wherein the air receiving apparatus starts receiving air from the outside of the gas separation apparatus when receiving the first control instruction, and the air receiving apparatus stops receiving the air from the outside of the gas separation apparatus when receiving the second control instruction;
the gas separation module is configured to separate the air to obtain the first target gas and
transport same to the first target gas output module; and
the first target gas output module is configured to output the first target gas to the 3D printer when receiving the first target gas.

8. The system as claimed in claim 7, **characterized in that**
a pressure difference unit is disposed on the first target gas output module; and the pressure difference unit is configured to detect an air pressure of the first target gas and send same to the controller.

9. The system as claimed in claim 7, **characterized in that**
a gas concentration sensor is disposed on the first target gas output module; and the gas concentration sensor is configured to detect a concentration of the first target gas and send same to the controller.

10. The system as claimed in claim 5, **characterized in that** the 3D printer comprises a material tray, and a release film and an inflation cavity, which are disposed at a bottom of the material tray; the release film is disposed above the inflation cavity; the inflation cavity is configured to accommodate the first target gas; a position sensor is disposed on the material tray; and the position sensor is configured to detect position data of the release film and send same to the controller.

11. The system as claimed in claim 7, **characterized in that** the gas separation apparatus comprises one or more of a nitrogen adsorption module or a nitrogen separation module.

12. The system as claimed in claim 11, **characterized in that** the first target gas comprises an oxygen-enriched gas, and the gas separation module comprises the nitrogen adsorption module; and
the nitrogen adsorption module connects with the first target gas output module, and the nitrogen adsorption module is configured to transport residual gases after nitrogen adsorption to the first target gas output module.

13. The system as claimed in claim 12, **characterized in that**
the nitrogen adsorption module is provided with an oxygen-enriched gas discharge port; and the nitrogen adsorption module is configured to discharge the residual gases after nitrogen adsorption via the oxygen-enriched gas discharge port, then release high-pressure adsorbed nitrogen, and perform next nitrogen adsorption after mixing gas after releasing with air received from the outside of the gas separation apparatus.

14. The system as claimed in claim 13, **characterized in that** the nitrogen adsorption module comprises a separation valve and a molecular sieve tower, wherein
the separation valve is configured to control a gas circulation route in the nitrogen adsorption module, wherein the separation valve is provided with a gas inlet configured to receive the air, an air vent configured to allow the air to flow to the molecular sieve tower, and an exhaust port configured to exhaust residual gas; and
the molecular sieve tower is configured to perform high-pressure adsorption on the nitrogen in the air, so as to obtain the residual gases after high-pressure adsorption, and release high-pressure adsorbed nitrogen.

15. The system as claimed in claim 13, **characterized in that** the gas separation apparatus further comprises a flow-limiting ring; and the flow-limiting ring is configured to limit a flow rate of the first target gas when the first target gas is discharged from the oxygen-enriched gas discharge port.

16. The system as claimed in claim 14, **characterized in that** at least two molecular sieve towers are disposed, and the air vent of the separation valve is configured to be switched between the at least two molecular sieve towers.

17. The system as claimed in claim 16, **characterized in that** the molecular sieve towers comprise a first molecular sieve tower and a second molecular sieve tower; the air vent of the separation valve comprises a first air vent and a second air vent; and the first air vent connects with the first molecular sieve tower, and the second air vent connects with the second molecular sieve tower.

18. The system as claimed in claim 17, **characterized in that**
in a first state, the separation valve controls the gas inlet to connect with the first air vent, and the second air vent to connect with the exhaust port;
in a second state, the separation valve controls the gas inlet to connect with the second air vent, and the first air vent to connect with the exhaust port; and
the separation valve is cyclically switched between the first state and the second state according to a predetermined cycle.

19. The system as claimed in claim 17, **characterized in that**
when the first molecular sieve tower performs high-pressure adsorption on the nitrogen in the air, and the second molecular sieve tower performs pressure equalizing on the first molecular sieve tower, causing the first molecular sieve tower to reduce a pressure to release the high-pressure adsorbed nitrogen; and
when the second molecular sieve tower performs high-pressure adsorption on the nitrogen in the air, and the first molecular sieve tower performs pressure equalizing on the second molecular sieve tower, causing the second molecular sieve tower to reduce a pressure to release the high-pressure adsorbed nitrogen.

20. The system as claimed in claim 7, **characterized in that** the gas separation apparatus further comprises an adjustment assembly; and the adjustment assembly is configured to limit a flow rate and/or direction of the first target gas when the first target gas is transported to the first target gas output module.

21. The system as claimed in claim 20, **characterized in that** the adjustment assembly comprises one or more of a flow-limiting ring, a speed control valve, a pressure regulating valve, a one-way valve, or a flow-limiting valve.

22. The system as claimed in claim 7, **characterized in that** a speed control valve and/or a one-way valve is disposed in the air receiving apparatus.

23. The system as claimed in claim 1, **characterized in that** the gas separation apparatus further comprises a filter, an oil-free air compressor, and a cooling unit, wherein
the filter is configured to filter dust and water vapor in the air, so as to obtain filtered air;
the oil-free air compressor is configured to increase a gas pressure of the filtered air, and accelerate a gas flow rate of the filtered air, so as to obtain compressed air; and
the cooling unit is configured to cool the compressed air to obtain cooled air.

24. The system as claimed in claim 7, further comprising a residual gas return channel and a low-oxygen gas output apparatus, **characterized in that**
the gas separation apparatus is further configured to separate external air and/or oxygen in a second target gas returned in the residual gas return channel, so as to obtain a third target gas;
the residual gas return channel is configured to return the second target gas to the air receiving apparatus; and
the low-oxygen gas output apparatus is configured to output the third target gas when receiving the third target gas.

25. The system as claimed in claim 24, **characterized in that** the gas separation apparatus is provided with a first gas outlet and a second gas outlet; and the second target gas is discharged via the first gas outlet, and flows to air pre-processing apparatus through the residual gas return channel.

26. The system as claimed in claim 25, **characterized in that** the first target gas output module is configured to receive and output the first target gas that is separated by the gas separation apparatus and discharged from the second gas outlet.

27. The system as claimed in claim 26, **characterized in that** a speed control valve configured to open an oxygen-enriched gas output channel is disposed on the first target gas output module.

28. The system as claimed in claim 26, **characterized in that** an oxygen concentration sensor is disposed on the first target gas output module; and the oxygen concentration sensor is configured to detect an oxygen concentration of the received first target gas.

29. The system as claimed in claim 26, **characterized in that** a one-way valve configured to control an air flow direction is disposed on the first target gas output module.

30. The system as claimed in claim 8, **characterized in that** the pressure difference unit is further configured to control an opening degree of a speed control valve of the first target gas output module based on the air pressure of the first target gas.

31. The system as claimed in claim 26, **characterized in that** the gas separation apparatus is configured to perform high-pressure adsorption on nitrogen in the air received in the air receiving apparatus, and discharge a remaining first target gas after high-pressure adsorption from the second gas outlet; and release the high-pressure adsorbed nitrogen after discharging the first target gas, so as to obtain the second target gas such that the second target gas returns to the gas separation apparatus through the residual gas return channel for cyclic processing.

32. The system as claimed in claim 24, **characterized in that** a speed control valve configured to open a low-oxygen gas output channel is disposed on the low-oxygen gas output apparatus.

33. The system as claimed in claim 24, **characterized in that** an oxygen concentration sensor is disposed on the low-oxygen gas output apparatus; and the oxygen concentration sensor is configured to detect an oxygen concentration of the received third target gas.

34. The system as claimed in claim 24, **characterized in that** a one-way valve configured to control an air flow direction is disposed on the low-oxygen gas output apparatus.

35. The system as claimed in claim 24, **characterized in that** a speed control valve configured to regulate an air inflow rate and/or a one-way valve configured to control an air flow direction are disposed on the air receiving apparatus.

36. The system as claimed in claim 24, **characterized in that** the residual gas return channel is provided with a switch valve; and the switch valve is configured to open the residual gas return channel.

37. A 3D printing method, executed by a controller, and **characterized by** comprising:
generating a control instruction according to a preset control policy, and sending the control instruction to a gas separation apparatus such that the gas separation apparatus, based on the received control instruction, separates a first target gas from air received from outside of the gas separation apparatus, so as to transport the first target gas to a 3D printer.

38. The method as claimed in claim 37, **characterized in that** the gas separation apparatus, based on the received control instruction, separating the first target gas from the air received from the outside of the gas separation apparatus, so as to transport the first target gas to the 3D printer comprises:
receiving external air by using an air receiving apparatus, and conducting the received air into an air pre-processing apparatus;
using the air pre-processing apparatus to process the air received by the air receiving apparatus, so as to obtain processed air, and conducting the processed air into the gas separation apparatus; and
using the gas separation apparatus to perform high-pressure adsorption on nitrogen in the processed air, and discharging a partial first target gas remained after high-pressure adsorption from a second gas outlet, so as to transport same to the 3D printer.

39. The method as claimed in claim 38, **characterized in that** when the second gas outlet of the gas separation apparatus connects with a first target gas output module, and a speed control valve is disposed on the first target gas output module, the method further comprises:
opening the speed control valve on the first target gas output module to output the obtained first target gas when an oxygen concentration sensor on the first target gas output module detects that a current oxygen concentration reaches a target oxygen concentration.

40. The method as claimed in claim 39, further comprising:
adjusting an opening degree of a speed control valve on the air receiving apparatus and an opening degree of the speed control valve on the first target gas output module according to the current oxygen concentration detected by the oxygen concentration sensor on the first target gas output module and the target oxygen concentration.

41. The method as claimed in claim 39, **characterized in that** when a pressure difference unit is disposed on the first target gas output module, the method further comprises:
detecting an air pressure of the first target gas based on the pressure difference unit, and using the pressure difference unit to control the speed control valve on the first target gas output module and an opening degree of the speed control valve on the air receiving apparatus based on the air pressure of the first target gas.

42. The method as claimed in any one of claims 37 to 41, **characterized in that** the first target gas is configured to supply oxygen to a printing process for 3D printing.

43. The method as claimed in claim 38, **characterized by** further comprising:
releasing high-pressure adsorbed nitrogen after discharging the partial first target gas, so as to obtain a second target gas;
returning the second target gas to the air pre-processing apparatus by using a residual gas return channel, and performing cyclic processing in combination with the air received by the air receiving apparatus;
detecting an oxygen concentration in the second target gas after cyclic processing by using an oxygen concentration sensor on a low-oxygen gas output apparatus of the residual gas return channel; and
obtaining a third target gas when the oxygen concentration sensor detects that a current oxygen concentration reaches a target oxygen concentration, and opening a speed control valve on the low-oxygen gas output apparatus to output the third target gas.

44. The method as claimed in claim 43, **characterized by** further comprising:
adjusting an opening degree of a speed control valve on the air receiving apparatus and an opening degree of the speed control valve on the low-oxygen gas output apparatus according to the current oxygen concentration detected by the oxygen concentration sensor on the low-oxygen gas output apparatus and the target oxygen concentration.

45. The method as claimed in claim 43, **characterized by** further comprising:
when the second gas outlet of the gas separation apparatus connects with a first target gas output module and a speed control valve is disposed on the first target gas output module, adjusting an opening degree of the speed control valve on the first target gas output module according to the current concentration detected by the oxygen concentration sensor on the low-oxygen gas output apparatus and the target oxygen concentration.

46. The method as claimed in any one of claims 43 to 45, **characterized in that** the third target gas is applied to post-processing of 3D printing as a curing protection gas.

47. A gas supply assembly, comprising an air receiving apparatus, a gas separation apparatus, a residual gas return channel, and a low-oxygen gas output apparatus, **characterized in that**
the air receiving apparatus is configured to receive external air;
the gas separation apparatus is configured to separate the external air and/or a second target gas returned in the residual gas return channel to obtain oxygen, so as to obtain a third target gas;
the residual gas return channel is configured to return the second target gas to the air receiving apparatus; and
the low-oxygen gas output apparatus is configured to output the third target gas when receiving the third target gas.

48. The gas supply assembly as claimed in claim 47, further comprising an air pre-processing apparatus, **characterized in that** a gas outlet of the air receiving apparatus connects with a gas inlet of the air pre-processing apparatus, and a gas outlet of the air pre-processing apparatus connects with a gas inlet of the gas separation apparatus.

49. The gas supply assembly as claimed in claim 48, **characterized in that** the air pre-processing apparatus comprises a filter, an air compressor, and a cooling unit, wherein
the filter is configured to dust and water vapor in the air received by the air receiving apparatus, so as to obtain filtered air;
the air compressor is configured to increase a gas pressure of the filtered air, and accelerate a gas flow rate of the filtered air, so as to obtain compressed air; and
the cooling unit is configured to cool the compressed air to obtain processed air.

50. The gas supply assembly as claimed in claim 48, **characterized in that** the gas separation apparatus is provided with a first gas outlet and a second gas outlet; and the second target gas is discharged via the first gas outlet, and flows to the air pre-processing apparatus through the residual gas return channel.

51. The gas supply assembly as claimed in claim 50, **characterized by** further comprising a first target gas output module, which is configured to receive and output a first target gas that is obtained by separating by the gas separation apparatus and discharged from the second gas outlet.

52. The gas supply assembly as claimed in claim 51, **characterized in that** a speed control valve configured to open an oxygen-enriched gas output channel is disposed on the first target gas output module.

53. The gas supply assembly as claimed in claim 51, **characterized in that** an oxygen concentration sensor is disposed on the first target gas output module; and the oxygen concentration sensor is configured to detect an oxygen concentration of the received first target gas.

54. The gas supply assembly as claimed in claim 51, **characterized in that** a one-way valve configured to control an air flow direction is disposed on the first target gas output module.

55. The gas supply assembly as claimed in claim 51, **characterized in that** a pressure difference unit is disposed on the first target gas output module; and the pressure difference unit is configured to detect an air pressure of the first target gas, and control an opening degree of a speed control valve of the first target gas output module based on the air pressure of the first target gas.

56. The gas supply assembly as claimed in claim 51, **characterized in that** the gas separation apparatus is configured to perform high-pressure adsorption on nitrogen in the air received in the air receiving apparatus, and discharge a remaining first target gas after high-pressure adsorption from the second gas outlet; and release the high-pressure adsorbed nitrogen after discharging the first target gas, so as to obtain the second target gas such that the second target gas returns to the gas separation apparatus through the residual gas return channel for cyclic processing.

57. The gas supply assembly as claimed in claim 56, **characterized in that** the gas separation apparatus comprises a separation valve, a molecular sieve tower, and a flow-limiting ring, wherein
the separation valve is configured to control a gas circulation route in the gas separation apparatus, wherein the separation valve is provided with a gas inlet configured to receive the processed air, an air vent configured to allow the processed air to flow the molecular sieve tower, and an exhaust port configured to exhaust a residual gas;
the molecular sieve tower is configured to perform high-pressure adsorption on nitrogen in the processed air, and release the high-pressure adsorbed nitrogen after discharging the remaining first target gas after high-pressure adsorption from the second gas outlet, so as to obtain the second target gas; and
the flow-limiting ring is configured to limit a flow rate of the first target gas when the first target gas is discharged from the second gas outlet.

58. The gas supply assembly as claimed in claim 57, wherein when the molecular sieve towers comprise a first molecular sieve tower and a second molecular sieve tower, and the air vent of the separation valve comprises a first air vent and a second air vent, the first air vent connects with the first molecular sieve tower, and the second air vent connects with the second molecular sieve tower.

59. The gas supply assembly as claimed in claim 58, **characterized in that**
in a first state, the separation valve controls the gas inlet to connect with the first air vent, and the second air vent to connect with the exhaust port;
in a second state, the separation valve controls the gas inlet to connect with the second air vent, and the first air vent to connect with the exhaust port; and
the separation valve is cyclically switched between the first state and the second state according to a predetermined cycle.

60. The gas supply assembly as claimed in claim 58, **characterized in that**
the first molecular sieve tower connects with the second molecular sieve tower through the flow-limiting ring.

61. The gas supply assembly as claimed in claim 60, **characterized in that**
when the first molecular sieve tower performs high-pressure adsorption on the nitrogen in the processed air, and the second molecular sieve tower performs pressure equalizing on the first molecular sieve tower, causing the first molecular sieve tower to reduce a pressure to release the high-pressure adsorbed nitrogen; and
when the second molecular sieve tower performs high-pressure adsorption on the nitrogen in the processed air, and the first molecular sieve tower performs pressure equalizing on the second molecular sieve tower, causing the second molecular sieve tower to reduce a pressure to release the high-pressure adsorbed nitrogen.

62. The gas supply assembly as claimed in claim 47, **characterized in that** a speed control valve configured to open a low-oxygen gas output channel is disposed on the low-oxygen gas output apparatus.

63. The gas supply assembly as claimed in claim 47, **characterized in that** an oxygen concentration sensor is disposed on the low-oxygen gas output apparatus; and the oxygen concentration sensor is configured to detect an oxygen concentration of the received third target gas.

64. The gas supply assembly as claimed in claim 47, **characterized in that** a one-way valve configured to control an air flow direction is disposed on the low-oxygen gas output apparatus.

65. The gas supply assembly as claimed in claim 47, **characterized in that** a speed control valve configured to regulate an air inflow rate and/or a one-way valve configured to control an air flow direction are disposed on the air receiving apparatus.

66. The gas supply assembly as claimed in claim 47, **characterized in that** the residual gas return channel is provided with a switch valve; and the switch valve is configured to open the residual gas return channel.

67. A method for preparing a gas, **characterized by** comprising:
receiving external air by using an air receiving apparatus, and conducting the received air into an air pre-processing apparatus;
using the air pre-processing apparatus to process the air received by the air receiving apparatus, so as to obtain processed air, and conducting the processed air into the gas separation apparatus;
using the gas separation apparatus to perform high-pressure adsorption on nitrogen in the processed air, discharging a remaining first target gas after high-pressure adsorption from a second gas outlet, and releasing the high-pressure adsorbed nitrogen after discharging the partial first target gas, so as to obtain a second target gas;
returning the second target gas to the air pre-processing apparatus by using a residual gas return channel, and performing cyclic processing in combination with the air received by the air receiving apparatus;
detecting an oxygen concentration in the second target gas after cyclic processing by using an oxygen concentration sensor on a low-oxygen gas output apparatus of the residual gas return channel; and
obtaining a third target gas when the oxygen concentration sensor detects that a current oxygen concentration reaches a target oxygen concentration, and opening a speed control valve on the low-oxygen gas output apparatus to output the third target gas.

68. The method as claimed in claim 67, **characterized by** further comprising:
adjusting an opening degree of a speed control valve on the air receiving apparatus and an opening degree of the speed control valve on the low-oxygen gas output apparatus according to the current oxygen concentration detected by the oxygen concentration sensor on the low-oxygen gas output apparatus and the target oxygen concentration.

69. The method as claimed in claim 68, **characterized by** further comprising:
when the second gas outlet of the gas separation apparatus connects with a first target gas output module and a speed control valve is disposed on the first target gas output module, adjusting an opening degree of the speed control valve on the first target gas output module according to the current concentration detected by the oxygen concentration sensor on the low-oxygen gas output apparatus and the target oxygen concentration.

70. The method as claimed in any one of claims 68 to 69, **characterized in that** the third target gas is applied to post-processing of 3D printing as a curing protection gas.

71. A method for preparing a gas, **characterized by** comprising:
receiving external air by using an air receiving apparatus, and conducting the received air into an air pre-processing apparatus;
using the air pre-processing apparatus to process the air received by the air receiving apparatus, so as to obtain processed air, and conducting the processed air into the gas separation apparatus; and
using the gas separation apparatus to perform high-pressure adsorption on nitrogen in the processed air, and discharging partial first target gas remained after high-pressure adsorption from a second gas outlet.

72. The method as claimed in claim 71, **characterized in that** the second gas outlet of the gas separation apparatus connects with a first target gas output module, and when a speed control valve is disposed on the first target gas output module, the method further comprises:
opening the speed control valve on the first target gas output module to output the first target gas when an oxygen concentration sensor on the first target gas output module detects that a current oxygen concentration reaches a target oxygen concentration.

73. The method as claimed in claim 72, **characterized by** further comprising:
adjusting an opening degree of a speed control valve on the air receiving apparatus and an opening degree of the speed control valve on the first target gas output module according to the current oxygen concentration detected by the oxygen concentration sensor on the first target gas output module and the target oxygen concentration.

74. The method as claimed in claim 72, **characterized in that** when a pressure difference unit is disposed on the first target gas output module, the method further comprises:
detecting an air pressure of the first target gas based on the pressure difference unit, and using the pressure difference unit to control the speed control valve on the first target gas output module and an opening degree of the speed control valve on the air receiving apparatus based on the air pressure of the first target gas.

75. The method as claimed in any one of claims 71 to 74, **characterized in that** the first target gas is configured to supply oxygen to a printing process for 3D printing.

76. A method for preparing a gas, **characterized by** comprising:
receiving external air by using an air receiving apparatus, and conducting the received air into an air pre-processing apparatus;
using the air pre-processing apparatus to process the air received by the air receiving apparatus, so as to obtain processed air, and conducting the processed air into the gas separation apparatus;
using the gas separation apparatus to perform high-pressure adsorption on nitrogen in the processed air, discharging partial first target gas remained after high-pressure adsorption from a second gas outlet, and releasing the high-pressure adsorbed nitrogen after discharging the partial first target gas, so as to obtain a second target gas;
returning the second target gas to the air pre-processing apparatus by using a residual gas return channel, and performing cyclic processing in combination with the air received by the air receiving apparatus;
detecting an oxygen concentration in the second target gas after cyclic processing by using an oxygen concentration sensor on a low-oxygen gas output apparatus of the residual gas return channel; and
obtaining a third target gas when the oxygen concentration sensor on the low-oxygen gas output apparatus detects that a current oxygen concentration is a low-oxygen gas target oxygen concentration, and opening a speed control valve on the low-oxygen gas output apparatus to output the third target gas.

77. The method as claimed in claim 76, **characterized in that** the second gas outlet of the gas separation apparatus connects with a first target gas output module, and when a speed control valve is disposed on the first target gas output module, the method further comprises:
opening the speed control valve on the first target gas output module to output the first target gas when an oxygen concentration sensor on the first target gas output module detects that a current oxygen concentration is an oxygen-enriched gas target oxygen concentration.

78. The method as claimed in claim 76, **characterized by** further comprising:
adjusting an opening degree of the speed control valve on the low-oxygen gas output apparatus according to the current oxygen concentration detected by the oxygen concentration sensor on the low-oxygen gas output apparatus and the low-oxygen gas target oxygen concentration.

79. The method as claimed in claim 77, **characterized by** further comprising:
adjusting an opening degree of the speed control valve on the first target gas output module according to the current oxygen concentration detected by the oxygen concentration sensor on the first target gas output module and the oxygen-enriched gas target oxygen concentration.

80. The method as claimed in claim 31, **characterized in that** when a pressure difference unit is disposed on the first target gas output module, the method further comprises:
detecting an air pressure of the first target gas based on the pressure difference unit, and using the pressure difference unit to control an opening degree of the speed control valve on the first target gas output module based on the air pressure of the first target gas.

81. The method as claimed in any one of claims 76 to 80, **characterized in that** the third target gas is applied to post-processing of 3D printing as a curing protection gas, and the first target gas is configured to supply oxygen to a printing process for 3D printing.
